# EUROPEAN PATENT APPLICATION

(11) **EP 2 843 542 A1**
(43) Date of publication of application: **04.03.2015**
(21) Application number: 14181088.7
(22) Date of filing: 14.08.2014
(51) Int. Cl.: G06F 3/14

(54) **User terminal apparatus, method for controlling user terminal apparatus, and expanded display system**

(30) Priority: 29.08.2013 US 201361871615 P; 28.05.2014 KR 20140064595
(71) Applicant: Samsung Electronics Co., Ltd, Gyeonggi-do 443-742 (KR)
(72) Inventor: Park, Hong-seok, Gyeonggi-do (KR); Kim, Byung-chul, Gyeonggi-do (KR); Park, Sang-young, Daegu (KR)
(74) Representative: Hewett, Jonathan Michael Richard

(57) **Abstract**

A user terminal apparatus, method for controlling the user terminal apparatus, and an expanded display system thereof are provided. ,The method includes in response to the user terminal apparatus being paired with an external display apparatus while an execution screen of an application is being displayed, obtain information on the display apparatus; and display a first screen of the application based on at least one piece of information on the application that the user terminal apparatus is executing and the obtained information on the display apparatus, and transmit data of a second screen of the application to the display apparatus.

## Description

The present invention relates to a user terminal apparatus, a method for controlling the user terminal apparatus, and an expanded display system, and more particularly, to a user terminal apparatus that reconfigures a screen and outputs the screen on a separate display, a method for controlling the user terminal apparatus, and an expanded display system thereof.

Due to the development of technologies related to user terminal apparatuses, contents to be displayed on recent user terminal apparatuses are becoming more diverse and complicated. These contents may be provided through various applications. Various applications exist, which range from applications that provide functions of sending messages that were widely used in related art user terminal apparatuses, to applications that require big display screens and high power consumption for games, video, cameras, and e-books.

In related art user terminal apparatuses, there were limitations in the size of display screens, and they had insufficient functions to display a screen in optical forms which could be conveniently viewed by a user. In order to resolve these problems, a technology was developed to divide a display screen into two or more display screens in order to provide a display screen which is convenient for the user. However, there still existed a problem that such screens could only be used when a mutual inclusive relationship between content elements and information was configured in advance.

Furthermore, there also existed a problem of insufficient management of power consumption according to the types of displays and contents.

The exemplary embodiments of the present invention provide a user terminal apparatus which reconfigures a screen according to display characteristics and application characteristics and displays the screen on a user terminal apparatus and an external display apparatus, and a control method and expanded display system thereof.

According to an exemplary embodiment, there is provided a user terminal apparatus comprising a displayer configured to display an execution screen of an application; a communicator configured to perform communication with a display apparatus; and a controller configured to, in response to the user terminal apparatus being paired with the display apparatus through the communicator while the displayer displays the execution screen of the application, obtain information on the display apparatus, control the displayer to display a first screen of the application based on at least one piece of information of the application that the user terminal apparatus is executing and the obtained information on the display apparatus, and control the communicator to transmit data of a second screen of the application to the display apparatus.

The information on the display apparatus may comprise at least one of a display type, resolution, response time, color, tone, viewing angle, color range, connection angle, and connection state of the display apparatus.

The information on the application may comprise at least one of a category, color properties per part, and screen renewal speed per part of the application.

The controller may divide the execution screen of the application being displayed on the displayer into a plurality of elements based on the information on the application, configure a first screen with a first set of the plurality of divided elements, and configure a second screen with a second set of the plurality of divided elements.

The controller may divide the execution screen of the application being displayed on the displayer into a plurality of elements based on a screen renewal speed per part, configure a first screen of the divided screen with elements that include video of the plurality of divided elements, and configure a second screen of the divided screen with the remaining elements of the plurality of divided elements.

The controller may divide the execution screen of the application being displayed on the displayer into a plurality of elements based on color properties per part, configure a first screen of the divided screen with elements of a first color of the plurality of divided elements, and configure a second screen of the divided screen with elements of a second color of the plurality of divided elements.

The controller may control the displayer to continue displaying the execution screen of the application as the first screen, and control the communicator to transmit data regarding a second screen that includes additional information on the execution screen of the application to the display apparatus.

The controller, in response to the execution screen of the application including a text, may control the communicator to transmit to the display apparatus data regarding the second screen that includes a text or image summarizing contents of the included text.

The controller, in response to the execution screen of the application including video contents, may control the communicator to transmit to the display apparatus data regarding the second screen that includes information or subtitle regarding the included video contents.

The controller, in response to a user input being made instructing a copy mode, may control the displayer not to display the first screen, and control the communicator to transmit to the displayer apparatus data on the execution screen of the application when a user input instructing the copy mode is determined.

The controller, in response to the display apparatus not supporting a user input, may control the communicator to transmit data corresponding to the user input to the display apparatus.

According to another exemplary embodiment, there is provided a method for controlling a user terminal apparatus, the method comprising in response to the user terminal apparatus being paired with an external display apparatus while an execution screen of an application is being displayed, obtaining information on the display apparatus; and displaying a first screen of the application based on at least one piece of information on the application that the user terminal apparatus is executing and the obtained information on the display apparatus, and transmitting data of a second screen of the application to the display apparatus.

The information on the display apparatus may comprise at least one of a display type, resolution, response time, color, tone, viewing angle, color range, connection angle, and connection state of the display apparatus.

The information on the application may comprise at least one of a category, color properties per part, and screen renewal speed per part of the application.

The method may further comprise dividing the execution screen of the application being displayed into a plurality of elements based on the information on the application; and configuring a first screen with a first set of the plurality of divided elements, and configuring a second screen with a second set of the plurality of divided elements.

The dividing may divide the execution screen of the application being displayed into a plurality of elements based on a screen renewal speed per part, and the configuring may configure the first screen with elements including video of the plurality of divided elements, and configure the second screen with the remaining elements of the plurality of divided elements.

The dividing may divide the execution screen of the application being displayed into a plurality of elements based on color properties per part, and the configuring may configure the first screen with elements of a first color of the plurality of divided elements, and configure the second screen with a second color of the plurality of divided elements.

The transmitting may continue displaying the execution screen of the application as the first screen, and transmit data regarding the second screen that includes additional information on the execution screen of the application to the display apparatus.

The method, in response to the execution screen of the application including a text, may transmit to the display apparatus data regarding the second screen that includes a text or an image summarizing contents of the included text.

The method, in response to the execution screen of the application including video contents, may transmit to the display apparatus data regarding the second screen that includes information or subtitle regarding the included video contents.

The transmitting, in response to a user input being made instructing a copy mode, may not display the first screen, but may transmit to the displayer apparatus data on the execution screen of the application when there is a user input instructing the copy mode.

The method may further comprise in response to the display apparatus not supporting a user input, transmitting data corresponding to the user input to the display apparatus.

According to another exemplary embodiment, there is provided an expanded display system comprising a display apparatus configured to be paired with a user terminal apparatus, and to display data of a second screen transmitted from the user terminal apparatus; and a user terminal apparatus configured to, in response to the user terminal apparatus being paired with the display apparatus while the displayer is displaying the execution screen of the application, obtain information on the display apparatus, display a first screen of the application based on at least one piece of information of the application that the user terminal apparatus is executing and the obtained information, and transmit data on the second screen of the application to the display apparatus.

According to the aforementioned various exemplary embodiments, it is possible to embody various user scenarios using a wide screen based on an interlocked operation of a user terminal apparatus and display apparatus, display a screen in an optical form so that a user may conveniently view the screen according to display characteristics, and display contents with low power according to the power consumption characteristics of each of the displays and applications.

The above and/or other aspects of the present disclosure will be more apparent by describing certain exemplary embodiments with reference to the accompanying drawings, in which:
FIG. 1 is a view illustrating an expanded display system according to an exemplary embodiment;
FIGS. 2 and 3 are block diagrams illustrating a configuration of a user terminal apparatus according to an exemplary embodiment;
FIG. 4 is a block diagram illustrating a module stored in a storage of a user terminal apparatus;
FIG. 5 is a view illustrating application characteristics according to category;
FIGS. 6A and 6B are views illustrating a screen configuration according to a screen renewal speed per part, according to an exemplary embodiment;
FIGS. 7A to 7C are views illustrating a screen configuration according to color properties per part, according to an exemplary embodiment;
FIGS. 8A to 8C are views illustrating various forms of dividing and reconfiguring a screen according to an exemplary embodiment;
FIGS. 9A to 9B are views illustrating a case of dividing a screen of a video reproducing application according to an exemplary embodiment;
FIG. 10 is a view illustrating a case of dividing a screen of an E-book according to an exemplary embodiment;
FIG. 11 is a view illustrating a case of summarizing and displaying a web browser screen according to an exemplary embodiment;
FIG. 12 is a view illustrating a case of summarizing and displaying contents of a E-book according to an exemplary embodiment;
FIG. 13 is a view illustrating a case of displaying graphically contents of a schedule application according to an exemplary embodiment;
FIG. 14 is a view illustrating a case of displaying meta information related to a photo according to an exemplary embodiment;
FIG. 15 is a view illustrating a case of displaying information or subtitles related to a video according to an exemplary embodiment;
FIG. 16 is a view illustrating a case of displaying help information related to a web browser screen according to an exemplary embodiment;
FIG. 17 is a view illustrating a case of displaying help information related to contents of a E-book according to an exemplary embodiment;
FIG. 18 is a view illustrating a case of displaying a photographic composition according to an exemplary embodiment;
FIGS. 19A and 19B are views illustrating a copy mode in a web browser according to an exemplary embodiment;
FIG. 20 is a view illustrating a copy mode in a E-book according to an exemplary embodiment;
FIG. 21 is a view illustrating a touch input support according to an exemplary embodiment;
FIG. 22 is a view illustrating a screen editing function support according to an exemplary embodiment;
FIG. 23 is a view for recognizing surrounding conversations during photographing and providing the same in an Sound-to-Text (STT) format according to an exemplary embodiment;
FIGS. 24A and 24B are views illustrating a case of displaying a widget according to an exemplary embodiment;
FIG. 25 is a view illustrating a case of displaying a message or email widget according to an exemplary embodiment;
FIGS. 26 and 27 are flowcharts illustrating a controlling method of a user terminal apparatus according to various exemplary embodiments;
FIG. 28 is a sequence illustrating an operation of an expanded display system according to an exemplary embodiment;
FIGS. 29A and 29B are a view and block diagram illustrating a user terminal apparatus having a plurality of displayers according to an exemplary embodiment;
FIGS. 30A to 31C are views illustrating a case where a display apparatus is configured in a case of a user terminal apparatus according to an exemplary embodiment.

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the application with unnecessary detail.

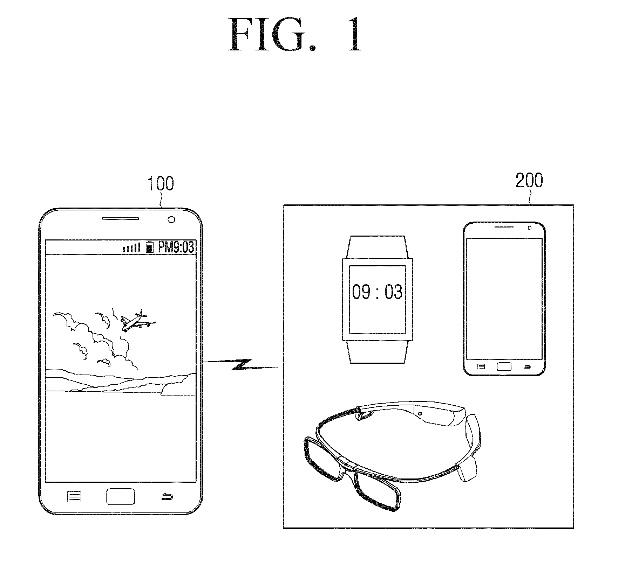

FIG. 1 is a view illustrating an expanded display system according to an exemplary embodiment. Referring to FIG. 1, an expanded display system includes a user terminal apparatus 100 and display apparatus 200.

The display apparatus 200 receives data from the user terminal apparatus 100 and displays a screen corresponding to the received data. As illustrated in FIG. 1, the display apparatus may be, but is limited to, a smart watch, smart phone, or smart glass. The display apparatus may be embodied as one of various apparatuses that have a displayer such as an E-paper, an E-frame, and a table personal computer (PC), but there is no limitation thereto. Furthermore, a display apparatus 200 such as a smart phone that includes a controller may also divide a display screen and perform functions that a controller of the user terminal apparatus 100 performs that will be explained hereinbelow.

When being paired with an external display apparatus 200 while displaying an execution screen of an application, the user terminal apparatus 100 obtains information on the display apparatus 200. Based on at least one piece of information of an application being executed on the display apparatus 200 and information obtained regarding the display apparatus 200, the user terminal apparatus 100 displays a first screen of the application. Furthermore, the user terminal apparatus 100 transmits data of a second screen of the application to the display apparatus 200.

In the aforementioned expanded display system, by pairing the user terminal apparatus 100 and display apparatus 200, it is possible to obtain effects such as expansion of a display screen, maximizing visibility, and efficient power consumption.

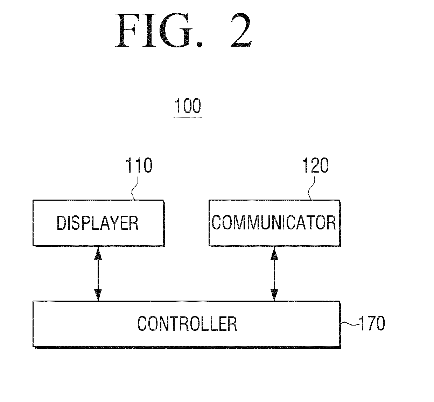

FIG. 2 is a block diagram schematically illustrating a configuration of a user terminal apparatus 100 according to an exemplary embodiment. Referring to FIG. 2, the user terminal apparatus 100 includes a displayer 110, communicator 120 and controller 170. Hereinbelow, the user terminal apparatus 100 is explained as a smart phone, but there is no limitation thereto, and the user terminal apparatus 100 may be embodied as an apparatus in which a tablet PC and so forth may be executed. The displayer 110 displays various screens that may be executed in the user terminal apparatus 100 including an application execution screen.

The displayer 110 may be designed as one of various display panels. That is, the displayer 110 may be embodied in various display technologies such as a Liquid Crystal Display, (LCD), Organic Light-Emitting Diode, (OLED), E-paper, Plasma Display Panel, (PDP), Vacuum Fluorescent Display (VFD), Field Emission Display (FED), and Electro Luminescence Display (ELD). The display panel may be a light emitting type display, but it may also be embodied as a reflective display. Furthermore, the displayer 110 may be embodied as a flexible display, or a transparent display and so forth.

The communicator 120 transmits/receives data to/from an external display apparatus 200. The communicator 120 may consists of wireless or wired communication modules and may perform wireless or wired communication with the display apparatus 200. More specifically, the communicator 120 receives information regarding the displayer apparatus 200, and transmits data of a second screen to be displayed on the display apparatus 200 to the display apparatus 200.

The controller 170 controls the overall configuration of the user terminal apparatus 100. Specifically, when paired with the display apparatus 200 through the communicator 120 while the displayer 110 displays an execution screen of the application, the controller 200 obtains information regarding the display apparatus 200, and controls the displayer 110 to display a first screen of the application based on at least one of information on the application that the user terminal apparatus 100 executes and the obtained information on the display apparatus 200, and controls the communicator 120 to transmit data of a second screen of the application to the display apparatus 200.

More specifically, the controller 170 may divide the execution screen of the application being displayed on the displayer 110 into a plurality of elements based on information on the application, configure a first screen with some of the plurality of divided elements, and configure a second screen with the remaining of the plurality of divided elements. According to an exemplary embodiment, the controller 170 may divide the execution screen of the application being displayed on the displayer 110 into a plurality of elements based on a screen renewal speed per part, and configure a first screen with elements that include video of the plurality of divided elements, and configure a second screen with the remaining of the plurality of divided elements. In the case of video, the screen renewal speed should be sufficiently fast, and thus video should be displayed on a display panel such as an OLED, and on a display panel such as E-paper that cannot keep up with the screen renewal speed of video, a screen having a slow screen renewal speed for text and so forth rather than video should be displayed. According to another exemplary embodiment, the controller 170 may divide the execution screen of the application being displayed on the displayer 110 into a plurality of elements based on color properties per part, and configure a first screen with elements of a first color of the plurality of divided elements, and configure a second screen with elements of a second color of the plurality of divided elements. There is a type of display for which power consumption increases in the case of displaying a screen having many bright displays close to white color according to characteristics of the display. For example, an OLED has spontaneous emission characteristics and thus in the case of having many bright displays close to white color, the power consumption increases. Therefore, based on the color properties per part, the controller 170 may control to configure a second screen with elements having many bright displays having a second color as white color, and configure a first screen with the remaining elements having a first color as black color in the OLED.

The controller 170 may control the displayer 110 to continue displaying the execution screen of the application as a first screen, and control the communicator 120 to transmit data of a second screen that includes additional information of the execution screen of the application to the display apparatus 200. For example, in the case where a user searches additional information on the execution screen of the application with only the user terminal apparatus 100, there may be inconvenience of having to stop execution of the application. If such additional information is displayed on the external display apparatus 200, the user may be able to have the user terminal apparatus 100 continue executing the application without stopping. According to an exemplary embodiment, in the case where the execution screen of the application includes a text, the controller 170 may control the communicator 120 to transmit data of a second screen that includes a text or image that summarized contents of the included text to the display apparatus. According to another exemplary embodiment, in the case where the execution screen of the application includes video contents, the controller 170 may control the communicator to transmit data of a second screen that includes information or subtitles of the included video contents to the display apparatus 200.

Furthermore, in response to there being a user input instructing a copy mode, the controller 170 may control the displayer 110 not to display the first screen, and control the communicator 120 to transmit data of the execution screen of the application when there was a user input instructing a copy mode to the display apparatus 200. For example, in the case of using E-paper that uses reflected light as the display apparatus 200, since E-paper is characterized to display letters and pictures after the screen is changed without electricity consumption, the user may use the copy mode to have the screen being displayed on the displayer 110 be moved to E-paper consuming less electricity and have it displayed.

In response to the display apparatus not supporting a user input, the controller 170 may control the communicator to transmit data corresponding to the user input to the display apparatus 200. For example, in order to convert a screen of the display apparatus 200 that does not support a scroll input, after receiving a scroll input in the user terminal apparatus 100, the controller 170 may convert the scroll input to data corresponding to a scroll input applicable to the display apparatus such as a page conversion input and so forth and transmit the data to the display apparatus 200.

With the user terminal apparatus 100 aforementioned, when using the display apparatus, a screen may be displayed in an optical form so that a user feels no inconvenience when viewing the screen, various additional information may be displayed on the display apparatus 200, and contents may be displayed using low electricity consumption according to low power consumption characteristics of the user terminal apparatus 100 and display apparatus 200.

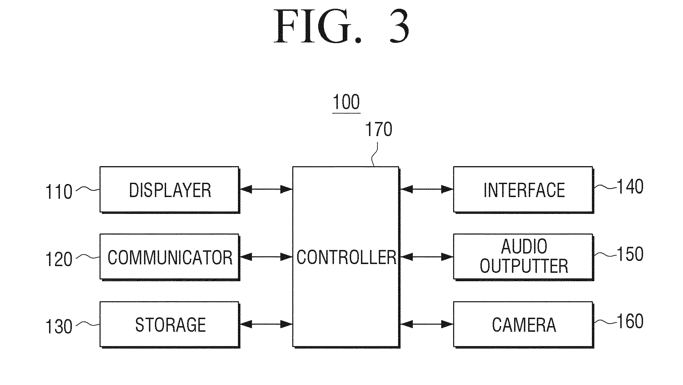

FIG. 3 is a block diagram illustrating in detail a configuration of a user terminal apparatus according to an exemplary embodiment. Referring to FIG. 3, the user terminal apparatus 100 includes a displayer 110, communicator 120, storage 130, interface 140, audio outputter 150, camera 160 and controller 170.

The displayer 110 displays various screens being executed on the user terminal apparatus 100 including an execution screen of an application. When only the user terminal apparatus 100 is being used, an execution screen of an application is displayed regardless of the type of display. Therefore, in a displayer 110 that has a certain type of display according to a type of the screen being displayed, it may not be suitable in terms of power consumption. Therefore, when reconfiguring a screen, it is desirable to configure a first screen to be displayed on the displayer 110 considering the characteristics of the displayer 110. Characteristics of the displayer 110 such as the type of display and so forth will be explained in detail hereinafter.

The communicator 120 transmits/receives data to/from the display apparatus 200. The communicator 120 consists of wireless or wired communicator modules and performs wireless or wired communication with the display apparatus 200. More specifically, the communicator 120 receives information of the display apparatus 200, and transmits data of the second screen to be displayed on the display apparatus 200 to the display apparatus 200.

The communicator 120 may use High Definition Multimedia Interface (HDMI), Low Voltage Differential Signaling (LVDS), and Local Area Network (LAN) wired communication methods. In the case where the communicator 120 is being connected to the display apparatus 200 through an HDMI which is one of the uncompressed type digital video/audio interface standards, there is an advantage of using a standard method of exchanging properties between a source and a sink that are supported in the HDMI itself. For example, through a defined method between a source and a sink that uses CEA861-based InfoFrame and E-EDID, a sink apparatus may provide the resolution of the sink apparatus and other properties related to display to the source apparatus. Likewise, when the user terminal apparatus 100 and the display apparatus 200 are being paired through the HDMI, it is possible to record information related to the display apparatus 200 in an E-EDID and provide it through a DDC channel, and thus the communicator 120 may receive physical connection states of the display apparatus 200 and the user terminal apparatus 100, and display properties information of the display apparatus 200. LVDS is a signal standard for transmitting image data from an image apparatus to a computer monitor, which is used in a Flat Panel Display Link (FPD) link of a plat panel or an open LVDS display interface (OpenLDI). In the case of communicating through an LVDS type wired connection, the communicator 120 may check the physical connection state of the wired LVDS by signals, and the communicator 120 may use the reserved or undefined data portion of the signals for exchanging the display properties information by newly defining the reserved or undefined data portion. More specifically, the LVDS interface may be changed according to the number of bits and pairs in dividing JEIDA and VESA, and the LVDS interface may use the reserved data portion to exchange the properties related to display. In the case where the user terminal apparatus 100 and display apparatus 200 are paired through a wired LAN, the information on whether or not connection is made by a determined protocol must be able to be transmitted/received for mutual recognition between the user terminal apparatus 100 and display apparatus 200. In a similar manner as defining the protocol, the use of exchanging data through the communicator 120 such as display properties information and so forth may also be defined. To this end, the protocol may be defined through an application layer or presentation layer that is on an upper level in the OSI 7 layer model (Open System Interconnection 7 Layer Model).

The communicator 120 may use various methods such as Near Field Communication (NFC), wireless LAN, InfraRed (IR) communication, Zigbee communication, WiFi, and Bluetooth for wireless communication. NFC is a technology for performing wireless communication in a very close distance, which is used in various services such as transportation, tickets and payment etc. The data communication speed currently being supported is 424 kbit per second. For pairing and exchanging of properties information between the user terminal apparatus 100 and display apparatus 200, the NFC Reader and NFC Tag may be mounted inside the user terminal apparatus 100 and display apparatus 200, respectively. Using the NFC Reader and NFC Tag mounted inside, it is possible to determine whether or not pairing is made based on a natural operation of the user terminal apparatus 100 and display apparatus 200 contacting each other, and as the NFC Reader mounted inside the user terminal apparatus 100 reads the information recorded in the NFC Tag mounted inside the display apparatus 200, the communicator 120 may receive the display properties information of the display apparatus 200. In the case where the user terminal apparatus 100 and display apparatus 200 are paired through a wireless LAN, information on whether or not a communication connection is made must be able to be transmitted/received through a determined protocol for mutual recognition between the user terminal apparatus 100 and display apparatus 200. In the same manner as the aforementioned wired LAN method, it is possible to define a protocol using an application layer or presentation layer in an upper level in the OSI 7 layer model, and the communicator 120 may transmit/receive data using the defined protocol.

As aforementioned, there are various wireless and wired communication methods that the communicator 120 may use, but are not limited to the aforementioned communication methods.

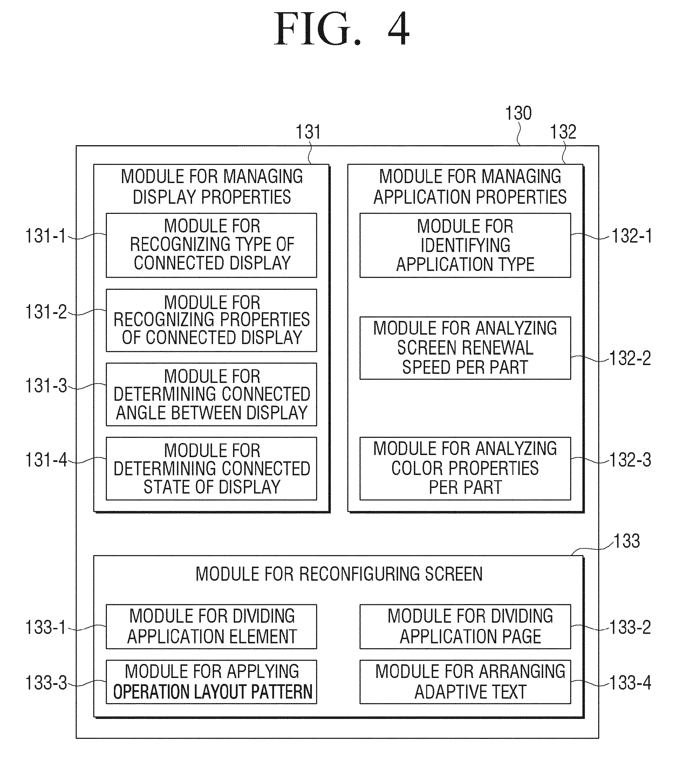

The storage 130 stores various programs, modules and data necessary for operating the user terminal apparatus 100. FIG. 4 is a block diagram illustrating some of the modules stored in the storage 130. As illustrated in FIG. 4, the storage 130 may include a module 131 for managing display properties, module 132 for managing application properties, and module 133 for reconfiguring a screen.

The module 131 for managing display properties is a module used to recognize and determine a display type, resolution, response time, color, tone, viewing angle, color range, connection angle, and connection state of the display apparatus 200. The module 131 for managing display properties may include a module 131-1 for recognizing a type of connected display, module 131-2 for recognizing properties of the connected display, module 131-3 for determining a connected angle between displays, and a module 131-4 for determining a connected state of the display.

More specifically, the module 131-1 for recognizing a type of connected display is used to recognize a display type of the display apparatus 200 being paired based on an operating method. Since power consumption characteristics differ based on a display type, it is necessary to differentiate a screen display method according to a display type. For example, in the case of a liquid crystal display (LCD), one pixel consists of liquid crystals to which two transparent electrodes are connected, and there exists polarizing filters on both sides that are vertical to each other. At a normal state, a regular arrangement of liquid crystal passes light, but when a voltage is applied, the arrangement of the liquid crystals is fixed and thus cannot pass light thereby blocking the light. Therefore, the LCD shows certain power consumption characteristics regardless of the screen to be displayed. Another example is an organic light emitting diode (OLED) that is a thin film light emitting diode wherein the layer that emits light is made of an organic compound. Since it has spontaneous light emitting characteristics, when there many displays close to white color, the OLED consumes a lot of electric power. Another example is E-paper that is a display technology where characteristics of normal ink are applied to paper. Unlike a related art flat panel display that uses a backlight such that a pixel may be illuminated, E-paper uses reflected light like normal paper. By the operating principle having bi-stable characteristics, when a screen is changed, a text and picture may be displayed without consuming electricity. Furthermore, E-paper may be folded or bent unlike a flat panel displayer. E-paper is a display that may be bent the most of all the existing displays. E-paper has a wide viewing angle compared to an LCD, and thus has an advantage of reading letters from vulnerable angles. However, due to the characteristics of E-paper using reflectance, it is impossible to use backlight, and the response time is slow, which is a disadvantage. Furthermore, in the case of a PDP, since PDPs use electrical discharge, there is almost no afterimage, and smooth screens are provided thereby causing less fatigue to the user's eyes, and the cost per inch is inexpensive. However, PDPs require a relatively large amount of power consumption, generates a large amount of heat, and are thick, which is a disadvantage.

The module 131-2 for recognizing properties of connected display is a module used to analyze common properties information of a display such as a resolution, response time, color, and tone. Since the configuration and display method need to differ according to the display properties of the display apparatus 200, it is necessary to use the module for recognizing properties of connected display 131-2. For example, in the case of response time, an OLED has a response time of µs (microsecond) units, an LCD has increased response time of 2∼30 ms, and E-paper has a response time of approximately 250 ms. Therefore, it is difficult to display an image that requires screen renewal of approximately 30 fps such as a general video. In the color and tone, most of E-paper has a Grayscale, and supports only some colors.

The module 131-3 for determining a connected angle between displays is a module that may be used often especially when the user terminal apparatus 100 and the display apparatus 200 are connected via cable. It may be possible to use a method of configuring the part that is connected with piezoelectric elements via cable, and measuring the stress caused by the bending angle to identify the connected angle. However, since a connected angle may be determined using a sensor for wireless connection as well, it is not a module that is used only for a wired connection. Since the scenarios that may be displayed using the user terminal apparatus 100 and display apparatus 200 differ depending on the connected angle, it is necessary to comprehend the connected angle. For example, when the connected angle is o°, a state where the displayer 110 contacts the part displayed on the display apparatus 200 may be assumed. It may be possible to use a part that does not overlap to display simple information. There may be another exemplary embodiment of executing a copy mode when the connected angle is 60° or less. Another example may be when the connected angle is 180°.

In an exemplary embodiment, most of the user terminal apparatus 100 and the display apparatus 200 will be paired by a connected angle of 180°. The representative exemplary embodiments explained hereinbelow are based on cases where the connected angle is 180°, but the connected angle does not have to be 180°. As another example, when the connected angle is 270° or less, there may be scenario where the displayer 110 and the part of the display apparatus 200 that is displayed are directed toward opposite directions and are stationed on a table. There may be a case where a user stations the displayer 110 and the part of the display apparatus 200 that is displayed and views only a screen on one side, but there may also be a case where two or more users face each other and view a screen on the other side. As another example, contrary to the case where the connected angle is o°, it may be assumed that in the case where the connected angle is 360°, the displayer 110 and the part of the display apparatus 200 are exposed.

The module 131-4 for determining a connected state of display is a module that may be used to determine whether or not the user terminal apparatus 100 and the display apparatus 200 are paired and their connected form. The determining method may differ depending on what type of communication method is used in the communicator 120.

The module 132 for managing application properties is a module used to recognize and determine a category, color properties per part, and screen renewal speed per part of an application being executed in the user terminal apparatus 100. The module 132 for managing application properties may include a module 132-1 for identifying application type, module 132-2 for analyzing screen renewal speed per part, and module 132-3 for analyzing color properties per part.

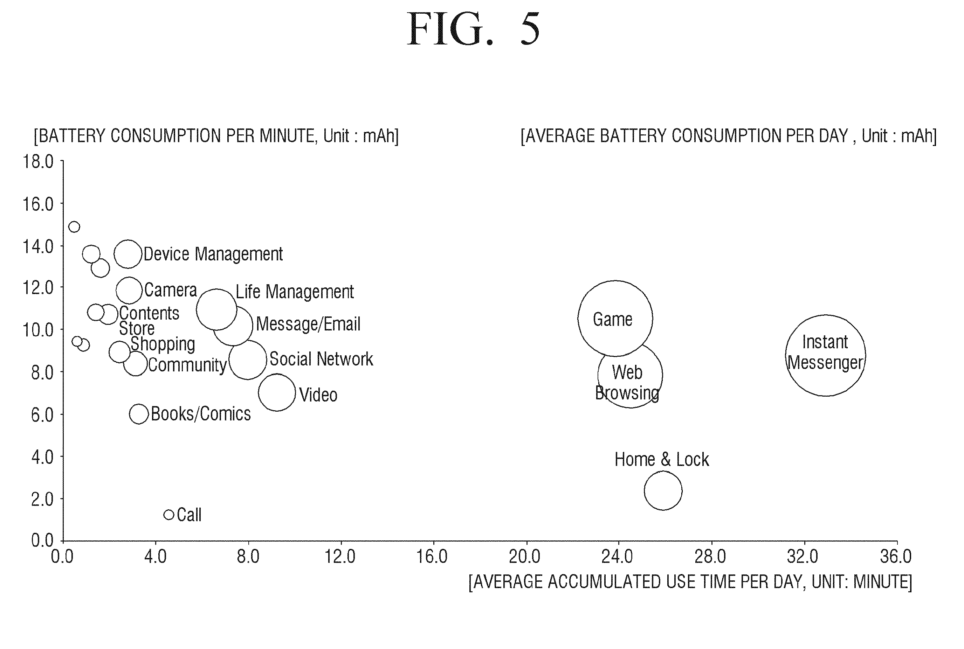

More specifically, since different display characteristics are needed according to the category of the application being executed, the module 132-1 for identifying application type is used to identify the category of the application being executed in the user terminal apparatus 100. FIG. 5 is a view illustrating application properties according to category. The nine most representative categories of the various application categories are Home & Lock Screen, web browser, E-book, message, camera, video player, calendar, gallery and game. As illustrated in FIG. 5, battery consumption differs with regard to each category, as is the scenario for reconfiguring a screen. For example, referring to FIG. 5, the game application has 5 times more battery consumption per minute compared to the Home & Lock Screen application.

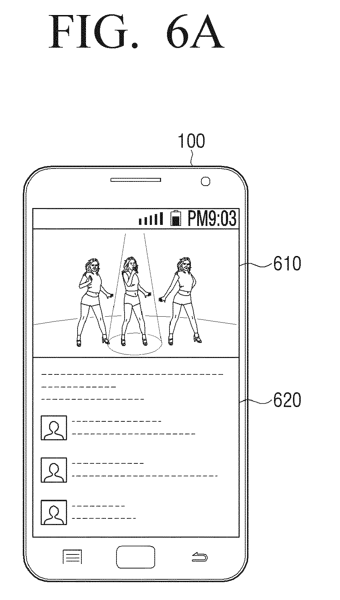

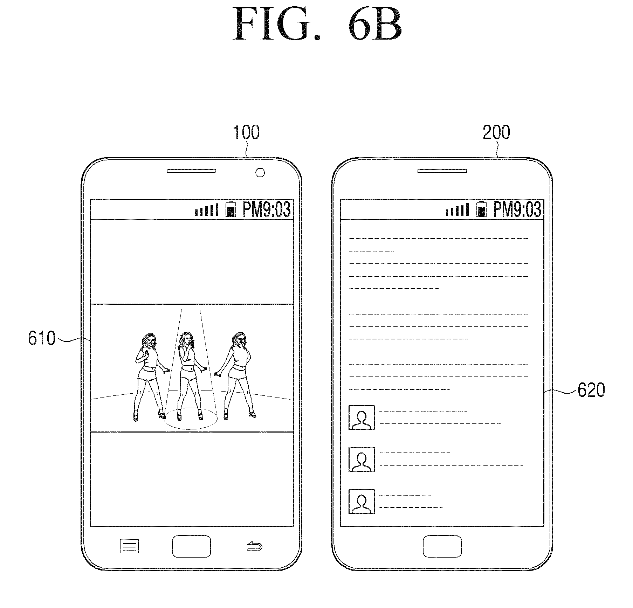

The module 132-2 for analyzing screen renewal speed per part is a module for dividing an application execution screen according to a screen renewal cycle and reconfiguring the screen. The reason why it is necessary to analyze the screen renewal speed is because there exists an apparatus that may not display contents that require a fast screen renewal speed according to display characteristics. For example, when the response time is slow as much as 250 ms such as in E-paper, contents that require a fast renewal speed such as video may not be displayed. FIG. 6A is a view illustrating the user terminal apparatus 100 displaying an application execution screen that includes a part 610 displaying video that requires a fast renewal speed and a part 620 displaying a text that does not need to be renewed. Using the module 132-2 for analyzing screen renewal speed per part, the application execution screen may be differentiated into two parts 610, 620. As illustrated in FIG. 6B, it is desirable that the part 610 which displays video that requires a fast renewal speed is displayed on the user terminal apparatus 100 that uses an OLED having fast response time characteristics, and that the part 620 which displays a text that does not need to be renewed, is displayed on the display apparatus 200 such as E-paper that does not need additional power consumption once it is renewed.

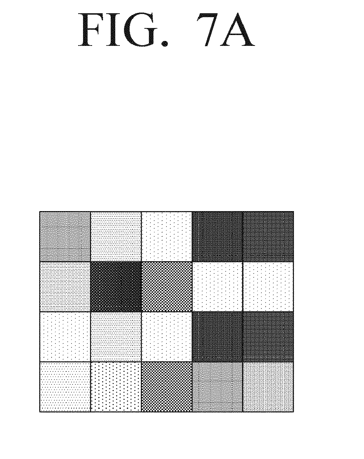

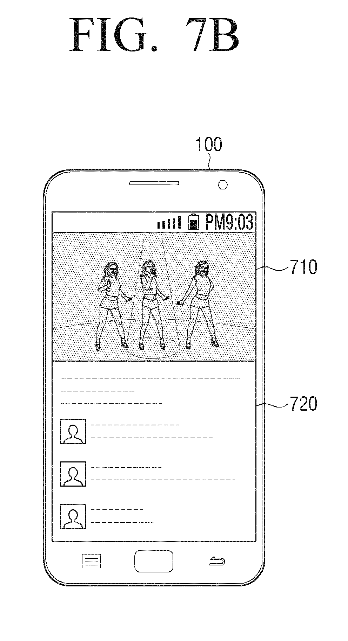

The module 132-3 for analyzing color properties per part may be used to obtain a color distribution histogram per area by color configuration, and to provide a power consumption standard according to color distribution thereby providing a screen reconfiguration standard. The reason why it is necessary to analyze color properties per part of the screen being displayed is because there occurs a difference in power consumption according to the display colors configuring the screen according to display characteristics. Specifically, in the case where a spontaneous emitting display such as an OLED is applied, color properties per part must be considered. FIG. 7A illustrates an example of a color histogram analysis per area that is used to analyze color properties per part. As illustrated in FIG. 7A, color analysis is not only possible on a black and white screen but it is also possible when various colors have been put in. FIG. 7B illustrates a screen 710, 720 where an application is being executed on the user terminal apparatus 100 prior to the reconfiguring of the screen. The part 710 which displays video may be an area which has a dark background, while the part 720 which displays a text seems to be an area where white colors are predominant as a whole since the text is black but the background of the text is white.

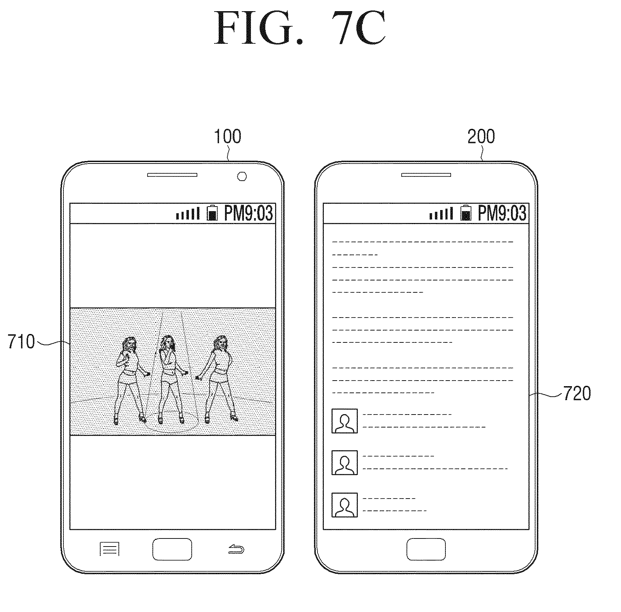

With the result of analysis using module for analyzing color properties per part 132-3, it is possible to display the screens 710, 720 of the user terminal apparatus 100 and display apparatus 200 separately as in FIG. 7C. For example, it is advantageous in terms of power consumption for the displayer 110 of the user terminal apparatus 100 that is configured by an OLED to display a part 710 which displays video on a screen of a black color that consumes less power, and for the display apparatus 200 that is configured by E-paper or an LCD that consumes less power for white color to display a part 720 which displays a text on a screen of white color.

The module 133 for reconfiguring a screen is a module used to reconfigure a screen to be displayed on the user terminal apparatus 100 and display apparatus 200 respectively using a method of dividing elements of an application being executed on the user terminal apparatus 100. The module 133 for reconfiguring a screen may include a module 133-1 for dividing application elements, module 133-2 for dividing the application page, module 133-3 for applying an operating layout pattern, and module 133-4 for arranging adaptive text.

More specifically, the module 133-1 for dividing application elements is a module for performing the function of dividing one application into different elements. In the case of an application that displays a document structured as a web page, an additional process of dividing the elements is not necessary. However, in the case of a general application, there needs to be a process of dividing the application into parts according to screen properties. Standards for dividing may be provided through the aforementioned module 132 for managing application properties. Dividing methods may include a method of detecting through a segmentation process, and a method for parsing a layout of an application.

The module 133-2 for dividing application page is a module for determining whether the display apparatus 200 is suitable for a scroll interface or for a page interface, and when the display apparatus 200 is suitable for a page interface, dividing the page. For example, in the case where a screen is being provided that displays a text using a scroll operation, the user terminal apparatus 100 may transmit the screen displaying the text to the display apparatus 200 that uses E-paper and display the screen. Due to characteristics such as a response time, it is difficult to apply the scroll method to E-paper. In such a case, the module 133-2 for dividing application page may divide the text per page so that a scroll interface does not occur and provide the divided text to the display apparatus 200 that uses E-paper.

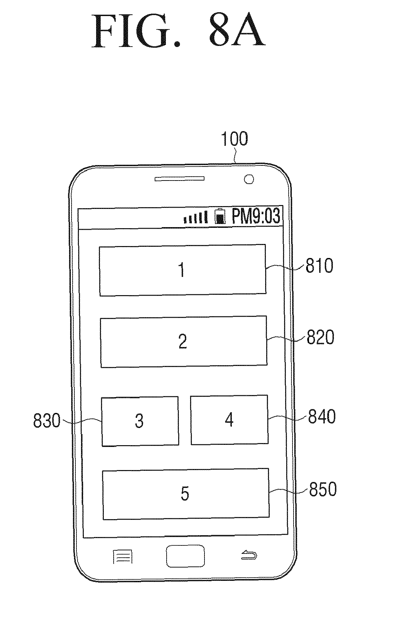

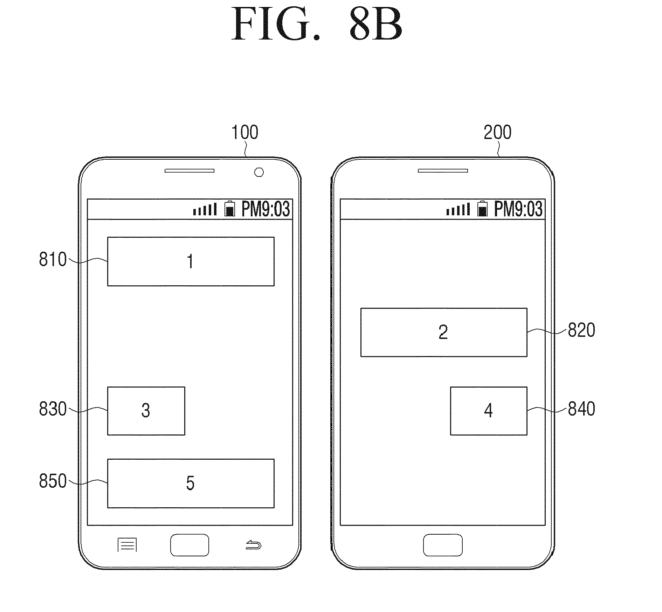

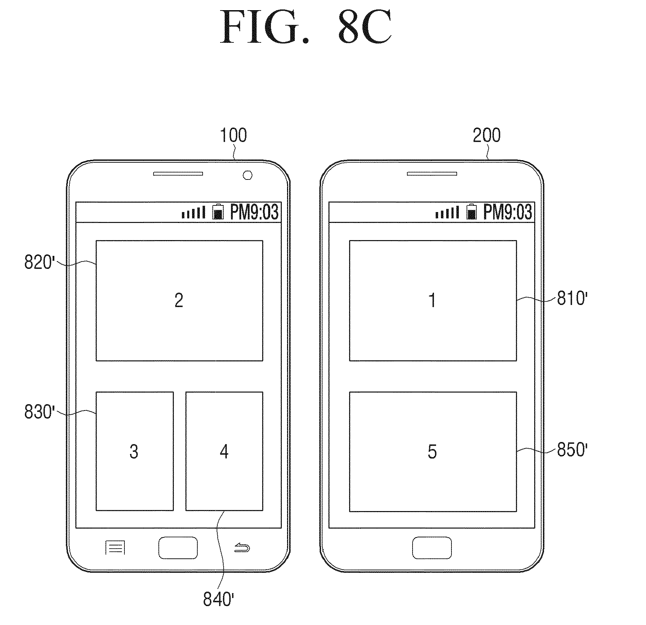

The module 133-3 for applying an operating layout pattern is a module for providing a control function that may perform each screen adaptively in the case of displaying the divided screen on the user terminal apparatus 100 and display apparatus 200 separately using the module 133-1 for diving application elements. The module 133-3 for applying an operating layout pattern may divide a screen dynamically and display the divided screen, and further, include a function of fitting the divided screen to the size of the screen. For example, referring to FIG. 8A, an execution screen being displayed on the user terminal apparatus 100 may be divided into five elements 810, 820, 830, 840, 850. FIG. 8B illustrates a case of dynamically dividing an execution screen. On the user terminal apparatus 100, three elements 810, 830, 850 of the divided elements may be displayed, and on the display apparatus 200, the remaining two elements 820, 840 may be displayed. FIG. 8C illustrates a case of dynamically dividing an execution screen and fitting the divided screen to the size of the screen. The user terminal apparatus 100 changes the size of the screen according to the size of the displayer 110, and the arrangement structure before reconfiguration and displays three elements 820', 830', 840'. The display apparatus 200 also displays two elements 810', 850' in larger sizes than the original sizes in accordance with the size of the screen. Hereinabove, changing the size of elements according to the size of the screen was explained, but there is no limitation thereto, and thus it is also possible to change the size of the elements based on other characteristics such as the resolution of display.

The module 133-4 for arranging adaptive text is a module for providing a function of automatically adjusting a flow of the text for the user's visibility upon an expansion/reduction command in the case of displaying a web page including the text on the display apparatus 200. There may be a scenario which uses the module 133-4 for arranging adaptive text systematically together with the module 133-2 for dividing the application page. For example, in the case of transmitting a text screen that used to be displayed on the user terminal apparatus 100 to the display apparatus 200 and displaying the text screen, the module 133-4 for arranging adaptive text may provide a function of changing a font size to a size suitable to the display apparatus 200 and changing the text such that it does not flow over the width of the display apparatus 200.

The interface 140 enables the user terminal apparatus 100 to receive/transmit a command to/from a user. For example, the interface 140 may be a touch screen or a keypad and so forth. According to an exemplary embodiment, in the case where the display apparatus 200 does not support a user input, the interface 140 may receive a user input in the user terminal apparatus 100 and transmit data corresponding thereto to the display apparatus 200 through the communicator 120. Furthermore, in the case where the size of the display apparatus 200 is small and thus it is difficult to directly touch the screen and edit the screen, there may be an exemplary embodiment for receiving an input of a screen editing command from the user in the interface 140 and editing the screen of the display apparatus 200.

The audio outputter 150 may output a voice signal of an application being executed on the user terminal apparatus 100.

The camera 160 enables an application that provides an image photographing and video photographing function to perform photographing. Furthermore, the camera 160 may perform recognition of a user's motion together with the interface 140. For example, in the case where the user performs a hand motion operation corresponding to a copy mode, the camera 160 may photograph the user's hand motion operation and provide it to the interface 140 or controller 170.

The controller 170 controls the displayer 110, communicator 120, storage 130, interface 140, audio outputter 150 and camera 160. The controller 170 may include a Read Only Memory (ROM) or Random Access Memory (RAM) which stores a module and data for controlling a CPU and user terminal apparatus 100. In such a case, the aforementioned module 131 for managing display properties, module 132 for managing application properties and module 133 for reconfiguring screen may be stored in the controller 170.

When paired with the display apparatus 200 through the communicator 120 while the displayer 110 displays an execution screen of an application, the controller 170 obtains information on the display apparatus 200, and controls the displayer 110 to display a first screen regarding the application based on at least one piece of information of the information on the application being executed by the user terminal apparatus 100 and the obtained information on the display apparatus 200, and controls the communicator 120 to transmit data of a second screen regarding the application to the display apparatus 200.

More specifically, based on the information on the application being executed on the user terminal apparatus 100 obtained using the module 133-1 for dividing application elements, the controller 170 may divide the application execution screen into a plurality of elements. A first screen is configured with some of the divided elements, and a second screen is configured with the remaining elements of the divided elements.

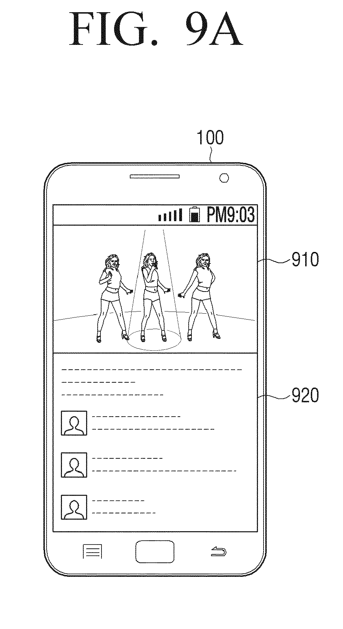

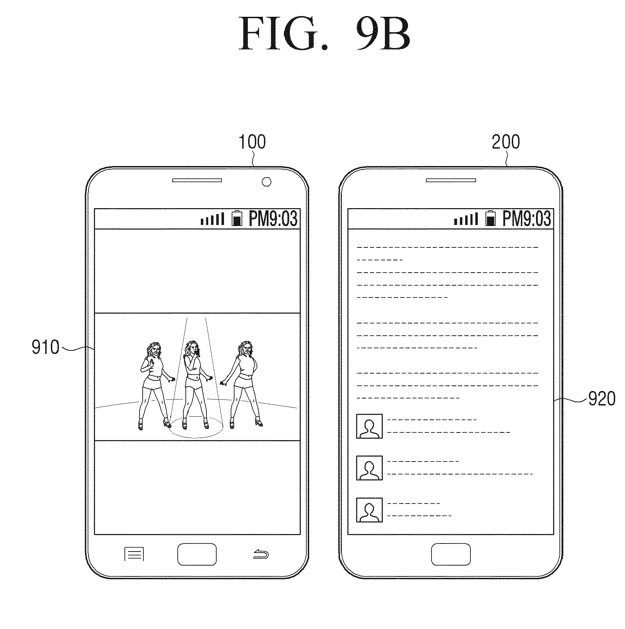

According to an exemplary embodiment, as illustrated in FIG. 9A, an execution screen consisting of a part including video 910 and a part including a text 920 may be displayed on the user terminal apparatus 100. Prior to dividing the execution screen into a plurality of elements, it is necessary to recognize information on the display type and properties. For example, assuming that the user terminal apparatus 100 illustrated in FIG. 9B is an apparatus having a displayer 110 consisting of an OLED, and the display apparatus 200 is an apparatus consisting of E-paper. An OLED is characterized to consume a large amount of power in expressing white color, while E-paper is characterized to have difficulty in displaying contents such as video that requires fast screen conversion. Therefore, based on such color properties per part and screen renewal speed per part, the controller 170 may divide the application execution screen into elements 910 including video, and elements 920 including a text that is the remaining part of the divided screen. Furthermore, the controller 170 may control such that a first screen is configured with the elements 910 including video and then displayed on the user terminal apparatus 100, and that a second screen is configured with the elements 920 including text and then data on the second screen is transmitted to the display apparatus 200 by the communicator 120.

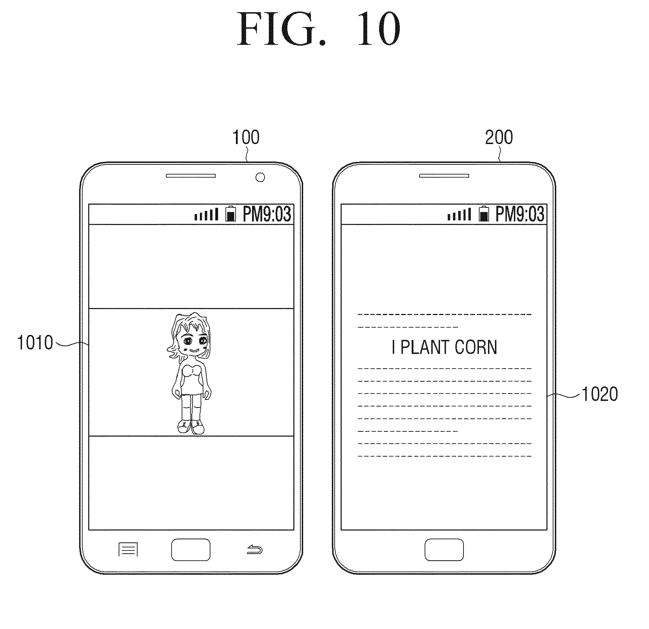

According to an exemplary embodiment, FIG. 10 is a view illustrating one E-book screen being displayed by the user terminal apparatus 100 and display apparatus 200. An E-book screen may include a picture part 1010 having colors and a part 1020 which displays text. Furthermore, the picture part 1010 may be replaced by, or include together with a picture, video contents and interactive contents and so forth. Assuming that the user terminal apparatus 100 illustrated in FIG. 10 is an apparatus where the displayer 110 consists of an OLED and the display apparatus 200 is an apparatus consisting of E-paper, a color or video should be displayed on the OLED display, while a text part where a lot of white color are arranged should be displayed on E-paper that consumes less power. Therefore, in dividing the E-book screen, a first screen is configured with elements 1010 including a picture part and displayed on the user terminal apparatus 100, and a second screen is configured with elements 1020 including a text part, and displayed on the display apparatus 200. This would be an efficient method for reconfiguring a screen.

According to an exemplary embodiment, the controller 170 may control the displayer 100 to keep displaying the execution screen of the application being executed on the user terminal apparatus 100 as a first screen, and control the communicator 120 to transmit data regarding a second screen including additional information on the execution screen to the display apparatus 200.

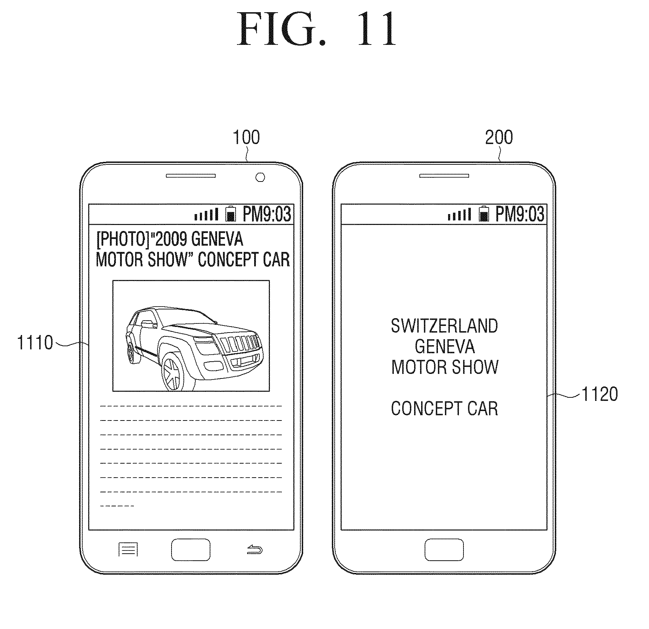

FIG. 11 is a view for explaining an exemplary embodiment of summarizing a web browser screen and displaying the web browser screen. Referring to FIG. 11, a web browser application is being executed on the user terminal apparatus 100, and a web page screen 1110 is being displayed on the displayer 110. It is possible to recognize contents of the web page screen 110, summarize the contents such as 'Geneva' and 'motor show' that are major contents of the web page screen 1110, and configure a second screen 1120 to be displayed on the display apparatus 200. In recognizing and summarizing a text, a natural language processing technology may be used. For the user's visibility, there may be a method for increasing the font size in proportion to the number of appearances of a word. The update cycle of information configuring the second screen 1120 may be updated every time a web page is refreshed in the user terminal apparatus 100, or at every predetermined time period. The exemplary embodiment illustrated in FIG. 11 may provide an effect of increasing the visibility of the text for the user.

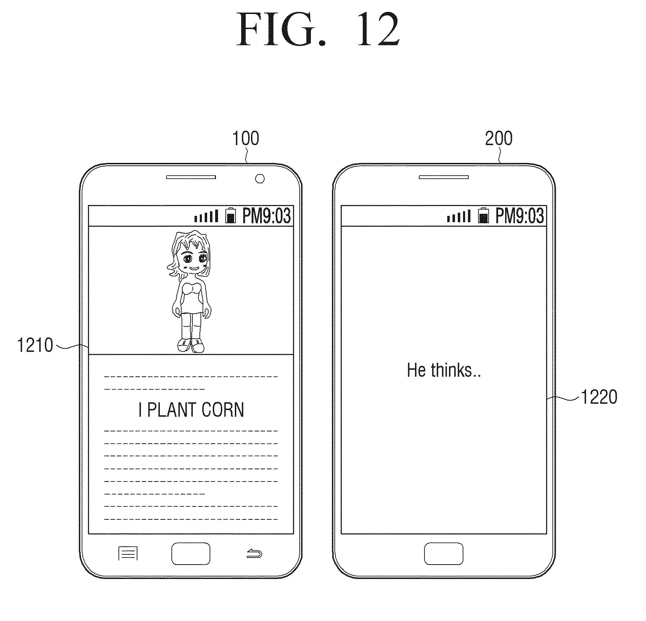

FIG. 12 is a view illustrating an exemplary embodiment for summarizing and displaying contents of an E-book. Referring to FIG. 12, an E-book execution screen 1210 is being displayed on the user terminal apparatus 100, and a screen 1220 where contents of the E-book execution screen 1210 are summarized into several sentences is being displayed on the display apparatus 200. The update cycle of the summarized screen 1220 may be updated whenever a page of the E-book being executed on the user terminal apparatus 100 is changed. If the E-book application being executed on the user terminal apparatus 100 is a type of application where contents are converted by scrolling, a method of updating at every predetermined cycle may be provided as well. In order to recognize the contents of the E-book, a natural language processing method may be applied. FIG. 12 illustrates only a case of displaying a screen 1220 where contents of E-book are summarized in sentences, but the contents may be expressed in pictures or icons so as to be easily recognized by the user.

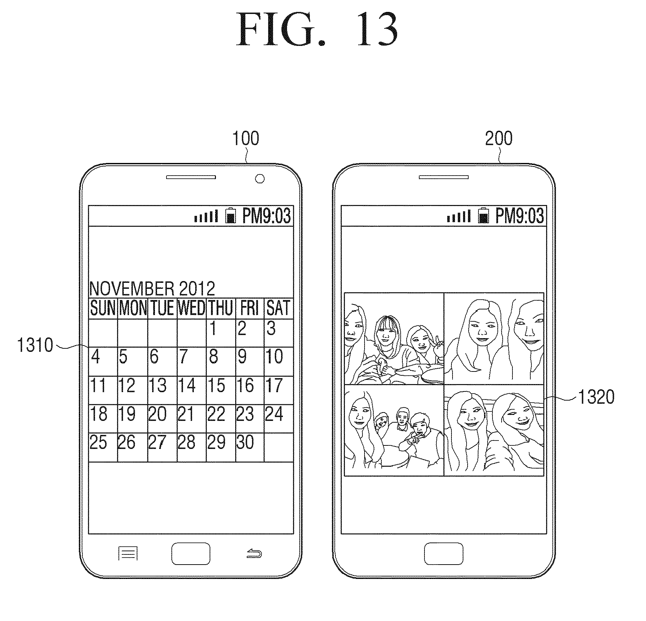

FIG. 13 is a view illustrating an exemplary embodiment of graphically displaying contents of a schedule application. Referring to FIG. 13, a screen 1310 executing a calendar application that includes a schedule is being displayed on the user terminal apparatus 100, and a second screen 1320 having the entire itinerary related to contents of a schedule in a cartoon format is being displayed on the display apparatus 200. In order to configure the itinerary in a cartoon format, not only the contents of the schedule but also information on the characteristics of a gathering recorded in a calendar application and information on whether or not it is an urgent itinerary may be taken into account together. The second screen 1320 may not necessarily be configured in a cartoon format. The second screen 1320 may be configured using a picture photographed by a camera 160 on the date of the corresponding itinerary.

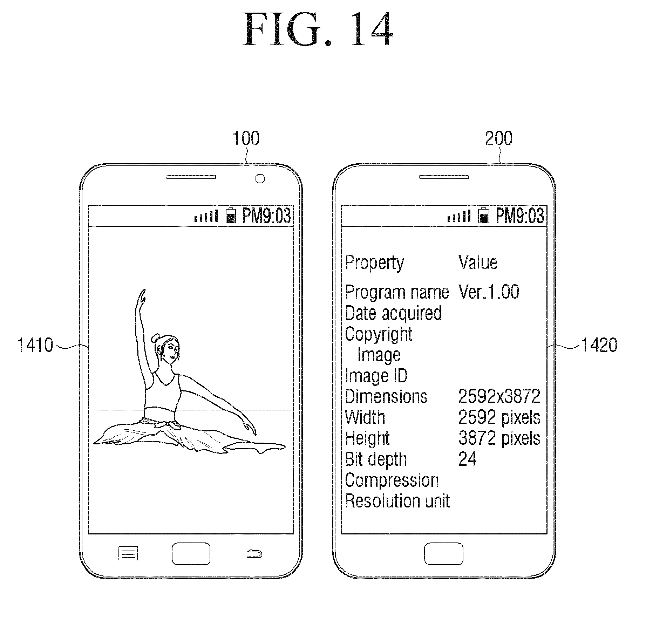

FIG. 14 is a view illustrating an exemplary embodiment of displaying meta information related to a photograph. Meta information related to a photograph may include a resolution, size, and format of the photograph, and photographed date and photographing apparatus information. Referring to FIG. 14, on the user terminal apparatus 100, an execution screen 1410 of a gallery application that shows a photograph is being displayed, and on the display apparatus 200, a second screen 1420 consisting of meta information of the photograph being displayed on a first screen 1410 is being displayed. It is desirable that the update cycle of the meta information being displayed on the second screen 1420 is updated every time an individual photograph is selected in the user terminal apparatus 100. According to another exemplary embodiment, in the case where a user input may be made in the display apparatus 200 as well, when a certain meta information value is selected and searched on the second screen 1420, a first screen 1410 may be configured with the photographs corresponding to the search conditions of the photographs stored in the user terminal apparatus 100 and be displayed. For example, in the case of conducting a search from the meta information having May 15 as the photographing time, if, of the photographs stored in the user terminal apparatus 100 there are four photographs that were photographed on May 15, a first screen 1410 may be configured such that four photographs are arranged in a lattice format or in a straight line and displayed.

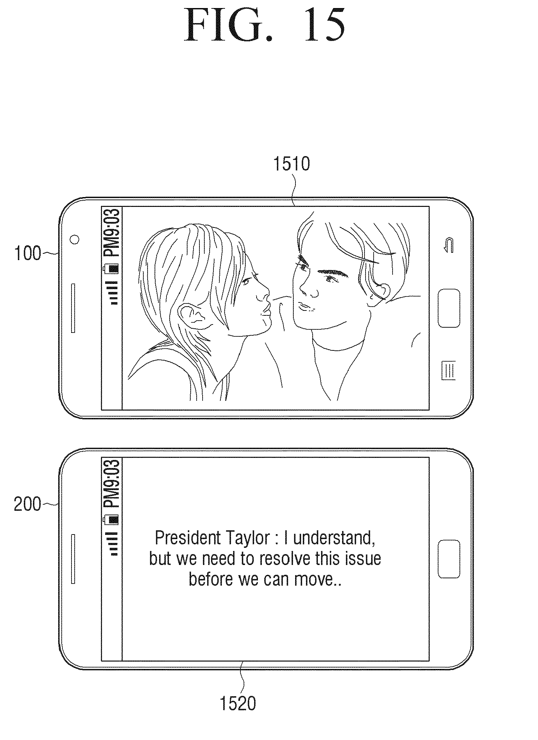

According to an exemplary embodiment, in the case where the execution screen of the application being displayed on the user terminal apparatus 100 includes video contents, the controller 170 may control the communicator 120 to transmit data of the information on the video contents and the second screen including subtitles to the display apparatus 200. Herein, the information on video contents may include storyline information, information on directors or actors/actresses, and information on the date of updating the video contents of the next showing. For example, in the method of obtaining the storyline information, information may be obtained in a method of accessing the Internet in a background of the user terminal apparatus 100 and be provided. Otherwise, information included in the video contents may be used. FIG. 15 is a view illustrating an exemplary embodiment of displaying information on video or subtitles. Referring to FIG. 15, on the user terminal apparatus 100, an execution screen 1510 of a video player application that may reproduce video contents is being displayed. On the display apparatus 200, subtitles of the video contents being displayed on the user terminal apparatus 100 are being displayed in a second screen 1520. E-paper that has the slowest response speed also has a screen renewal speed sufficient to display subtitles, and thus an exemplary embodiment of displaying subtitles may be carried out in a display apparatus 200 of any display type.

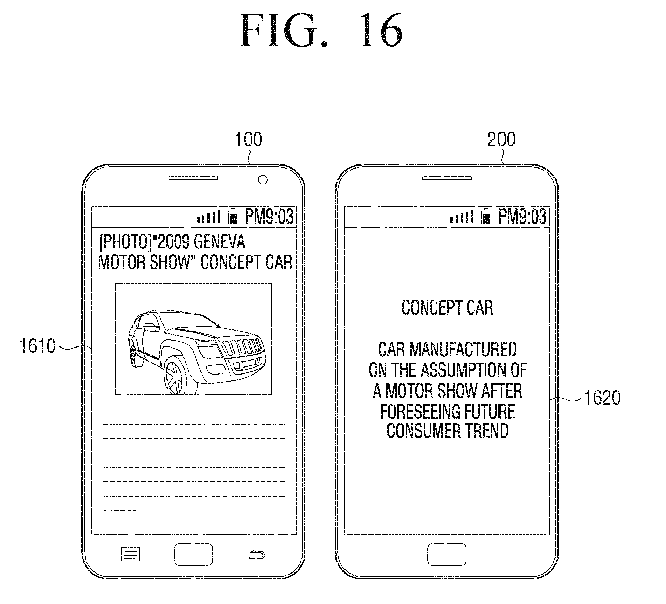

According to another exemplary embodiment, in the case where an application for displaying a web page is being executed on the user terminal apparatus 100, contents that may help reading a web page may be displayed on the display apparatus 200. In the case of wanting to search an interpretation of a related term while reading a web page using the user terminal apparatus 100, the user has the inconvenience of stopping web browsing in order to convert the screen where a web page is being displayed into a screen for searching a term. However, if it is possible to search a related term in the display apparatus 200, the user would be able to obtain related information without stopping web browsing. FIG. 16 is a view illustrating an exemplary embodiment for displaying help information related to a web browser screen. On the user terminal apparatus 100, an execution screen 1610 of a web browser application is being displayed, and on the display apparatus 200, a second screen 1620 including glossary information on 'concept car' of the contents of the web browser screen 1610 is being displayed. A part that needs glossary information may be automatically selected from the contents of the web page 1610, or it may be selected by the user by a touch input from the first screen 1610 through the interface 140. For example, in the case where the user selected a 'Geneva International motor show' part from the contents of the first screen 1610, on the second screen 1620, information on the 'Geneva International motor show' may be displayed. Information needed to configure a second screen 1620 may be obtained from a dictionary application stored in the user terminal apparatus 100, or through internet access. In the case of automatically selecting a part that needs glossary information, the information updating cycle may be updated every time the web page 1610 is refreshed in the user terminal apparatus 100, or may be updated such that glossary information on another term is displayed when a determined time passed. In the case where the user selected a part that needs glossary information, the information updating cycle may be selected such that an update is not made until there is another user input.

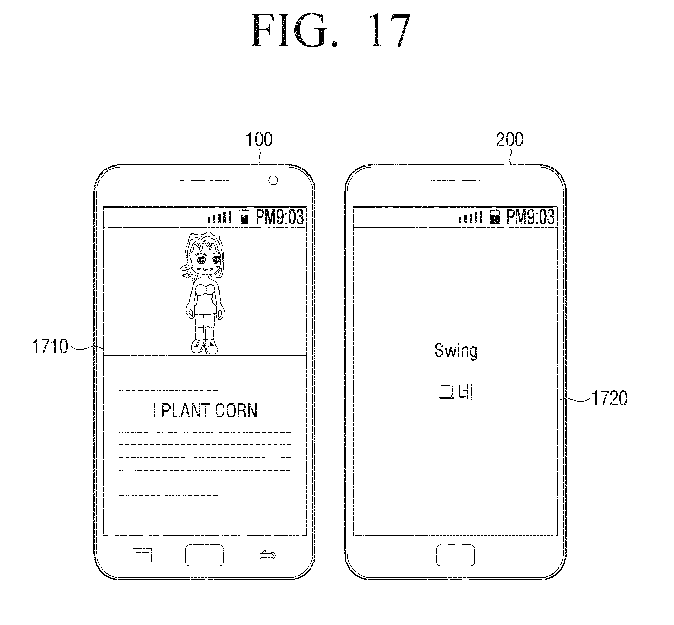

FIG. 17 is a view illustrating an exemplary embodiment for displaying help information related to contents of an E-book. Referring to FIG. 17, on the user terminal apparatus 100, an execution screen 1710 of an E-book application is being displayed, and on the display apparatus 200, English dictionary information on the terms appearing in the E-book is provided. On the second screen 1720, of the terms that appear in the E-book, ' 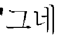 ' which is the Korean word for 'Swing' is displayed together. Information on the E-book that configures the second screen 1720 may include a dictionary, glossary information on related terms, bookmark, emphasis, and memo, but is not limited thereto. A part that needs glossary information and dictionary searching may be automatically selected from the contents of the E-book, or may be selected by the user. Dictionary searching may operate in a customized way based on a personalized database using an existing dictionary search history. The information updating cycle may be made every time a page of the E-book is converted in the user terminal apparatus 100. However, for information such as a bookmark, emphasis, and memo that the user would find more convenient if it is on display regardless of page conversion, the updating cycle may be set such that an update is not made until there is a certain user input.

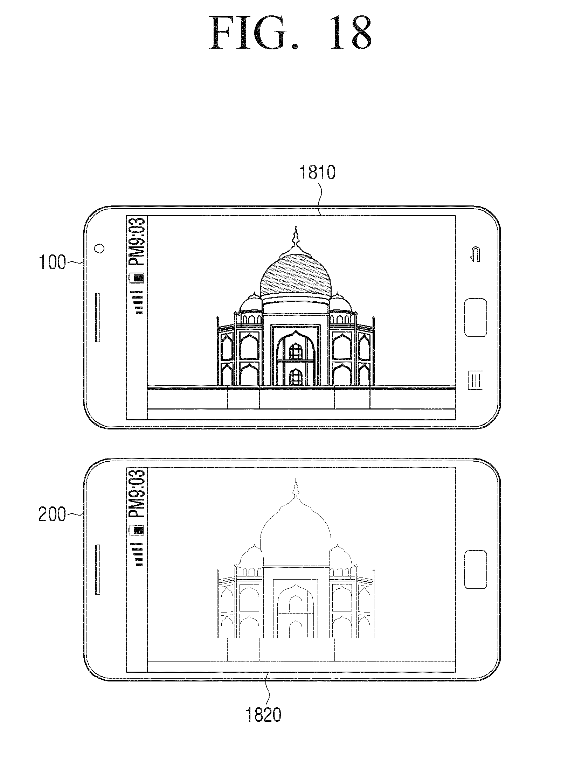

The performance of a camera apparatus mounted on the camera 160 of the user terminal apparatus 100 is gradually improving, and users photographing images using the user terminal apparatus 100 has become a common practice. However, since normal users do not have expertise in angles or compositions of photographing, providing information on photographing angles or compositions may be a useful experience to the users. FIG. 18 is a view illustrating an exemplary embodiment of displaying composition information when taking a photograph. On the user terminal apparatus 100, a photographing screen 1810 that is shown through the camera 160 is displayed. In the case of providing composition information in the user terminal apparatus 100, a photographing screen 1810 and a composition information screen has to be seen alternately, and thus the user becomes dependent on his/her memory, which is inconvenient. By providing a composition sketch screen 1820 regarding a same place to the display apparatus 200, the user terminal apparatus 100 enables the user to take a photograph corresponding to a recommended composition more easily. Specifically, in the case of a famous tourist spot, it would be possible to provide the user with information on a representative photograph composition of the tourist spot that the user is currently located in using a GPS apparatus that may be included in the user terminal apparatus 100.

According to another exemplary embodiment, in the case of executing a message application in the user terminal apparatus 100, on the second screen of the display apparatus 200, a record of previous conversations with a counterpart, anniversary or event information may be displayed. Displaying a record of previous conversations on the display apparatus 200 may help the user conduct an uninterrupted conversation with the counterpart, and prevent the user from making a mistake during the conversation.

According to an exemplary embodiment, when there is a user input instructing a copy mode, the controller 170 may control the displayer 110 not to display a first screen, and may control the communicator 120 to transmit data regarding the application execution screen when there is a user input instructing a copy mode to the display apparatus 200.

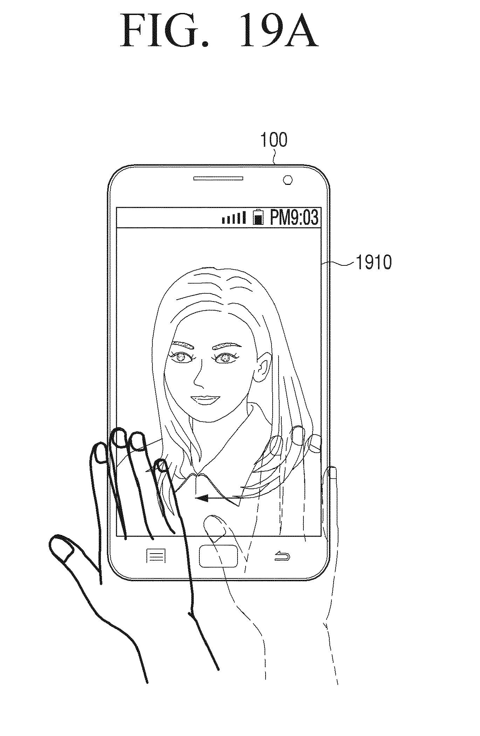

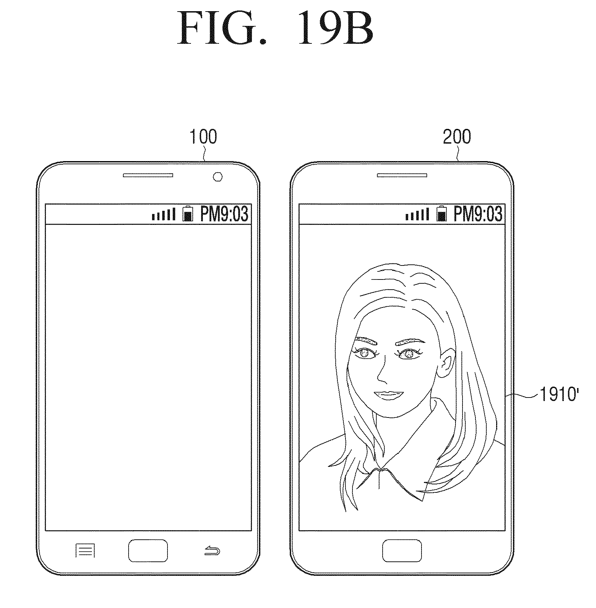

FIG. 19A is a view illustrating a case where there is a user input instructing a copy mode in a web browser. Referring to FIG. 19A, in order to instruct a copy mode, the user performs an operation of scrubbing over the user terminal apparatus 100 using his/her hands. Through a motion recognition operation regarding the user's motions using the interface 140 or camera 160, the user terminal apparatus 100 recognizes that there was a user command regarding a copy mode. A user input instructing a copy mode may be a different type of predetermined operation. The predetermined operation may be a user input using a touch screen or keypad and so forth, instead of motion recognition. Referring to FIG. 19B a screen 1910 that was in display on the user terminal apparatus 100 when there was a user input regarding a copy mode in FIG. 19A is copied as it is to the display apparatus 200, and then a second screen 1910 is configured and displayed. After the screen is copied to the display apparatus 200 according to a copy mode operation, nothing may be displayed on the user terminal apparatus 100. However, unlike as illustrated in FIG. 19B, there may be an exemplary embodiment where the execution screen of an application is kept on display on the user terminal apparatus 100, and only the execution screen of the application when there was a user input instructing a copy mode is copied to the display apparatus 200. One of the purposes of using a copy mode is to reduce power consumption. In the case of pairing with a display apparatus 200 that consumes less power than the user terminal apparatus 100, it is possible to have the display apparatus that consumes less power display the screen that was previously displayed on the user terminal apparatus 100, and have the user terminal apparatus 100 display nothing, thereby reducing the overall amount of power consumption.

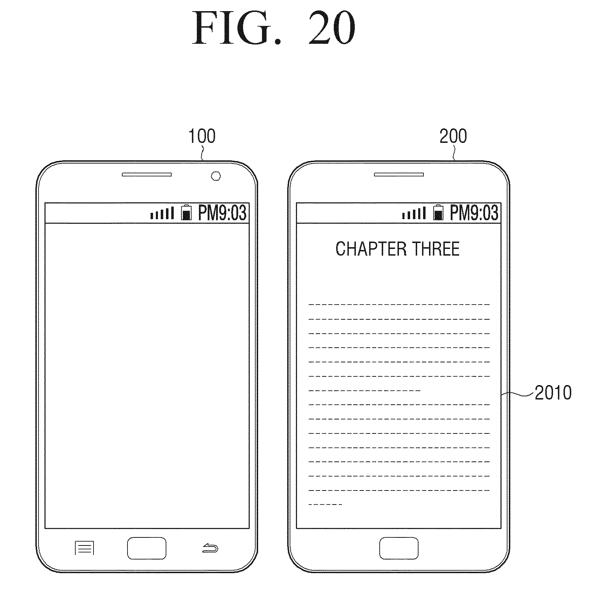

The copy mode may be more useful in a static screen such as a web page and E-book compared to when the contents that are renewed frequently such as video is displayed. FIG. 20 is a view for explaining an exemplary embodiment that performed a copy mode in the E-book. In the display apparatus 200, the E-book screen that used to be displayed on the user terminal apparatus of when there was a user input instructing a copy mode is copied to configure a second screen 2010 and then displayed. The screen that used to be displayed on the user terminal apparatus is not displayed any more. For example, in the case of E-book, since the user reads letters, the user would be able to instruct a copy mode more easily without having to perform an additional operation by using an eye scroll which is a motion recognition using the eyes of a human body. According to another exemplary embodiment, in the case where it is recognized by the camera 160 of the user terminal apparatus 100 that the user finished reading the E-book screen 2010 which was copied and displayed on the display apparatus 200, the controller 170 may transmit data to the display apparatus 200 corresponding to a next page directly without an operation of displaying the screen on the user terminal apparatus 100 again. According to another exemplary embodiment, a function of performing a copy mode in connection with a sensor may be provided. In the case of shortly closing and opening the screen that used to be displayed through the user terminal apparatus 100, the first screen that used to be displayed on the user terminal apparatus 100 may be copied to the second screen of the display apparatus 200 and be displayed. The controller 170 would be able to identify that an operation of closing and opening the display apparatus was performed using a hall sensor using magnet principles, illuminance sensor, direction/location sensor, and camera 160. Furthermore, there may also be a method for determining that there was a user command instructing a copy mode when it is determined that the connected angle is o° using the module 131-3 for determining a connected angle between display.

According to an exemplary embodiment, when the display apparatus 200 does not support a user input or it is difficult to edit the screen due to its small size, the controller 170 may control the communicator 120 to transmit data corresponding to a user input or screen editing command to the display apparatus 200.

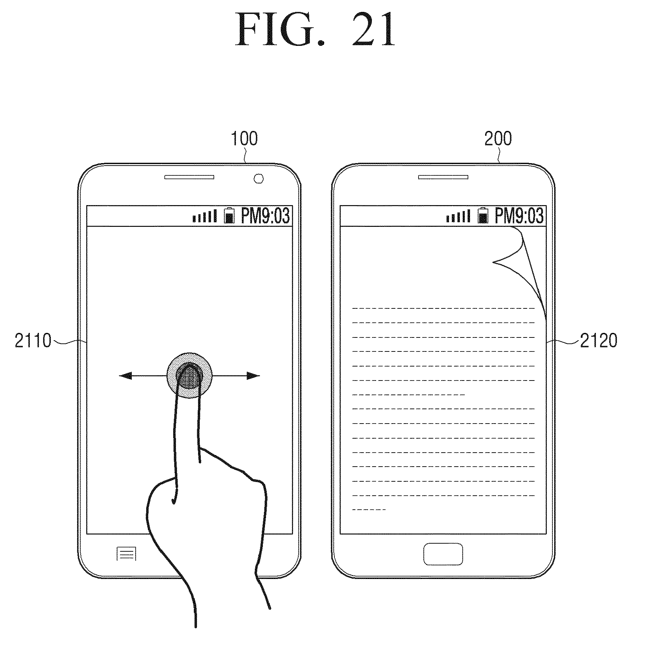

FIG. 21 is a view illustrating an exemplary embodiment for supporting a touch input. Referring to FIG. 21, the display apparatus 200 is a display apparatus that does not support a user input such as a touch. The user inputs a touch corresponding to a page conversion into the screen 2110 of the user terminal apparatus, and the controller 170 controls the communicator 120 to transmit data corresponding to a user input to convert a page to the display apparatus 200. The display apparatus 200 is made to perform an operation of converting a page in the second screen based on the user input data received. Such a function of controlling the display apparatus 200 through a touch input in the user terminal apparatus may be configured in a module. A display apparatus touch input module 131-5 (not illustrated) that performs such a function may be included in the module for managing display properties 131.

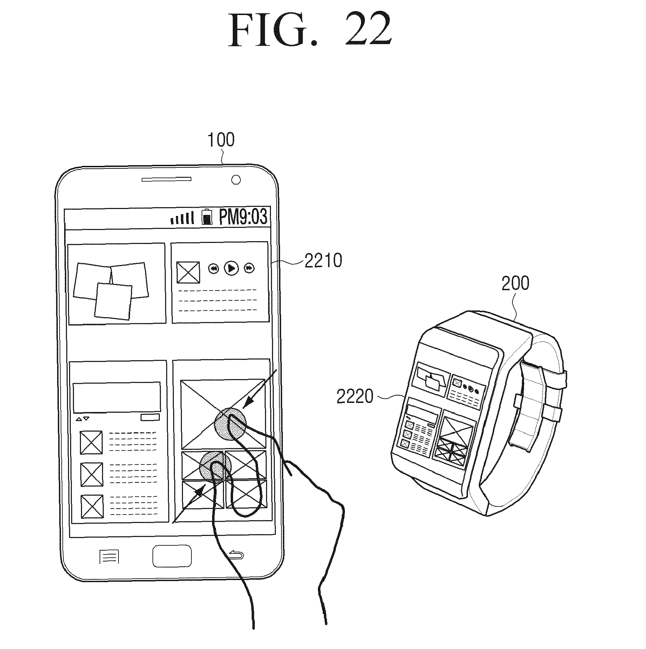

According to another exemplary embodiment, the user may perform screen editing of the display apparatus 200 through the user terminal apparatus 100. FIG. 22 is a view illustrating an exemplary embodiment of supporting a screen editing function. In the case where the display apparatus 200 illustrated in FIG. 22 is an apparatus having a small screen such as a smart watch, even if the display apparatus supports a user input, it is easier to edit the screen using the user terminal apparatus 100 having a bigger screen. Furthermore, even in the case of a display apparatus 200 that does not provide a screen editing function, an exemplary embodiment of providing a screen editing function may be applied. Assuming that the display apparatus 200 selectively displays only some information while under an idle screen or home screen state, since widget information to be displayed all the time for each user may differ, it is necessary to personalize a widget screen. By providing a screen for widget editing the display apparatus 200 paired within a home screen editing mode of the user terminal apparatus 100 and editing a widget corresponding to the display apparatus 200 in the user terminal apparatus 100, it is possible to have corresponding contents be reflected in the display apparatus real time. By way of another example, even in the case of using E-paper as a display apparatus 200, changing location through a Drag & Drop when entering an E-paper Layout mode or inserting/deleting of a widget exclusive for E-paper may be supported. Furthermore, it is possible to have the layout changed when inputting a back button to be automatically reflected in E-paper.

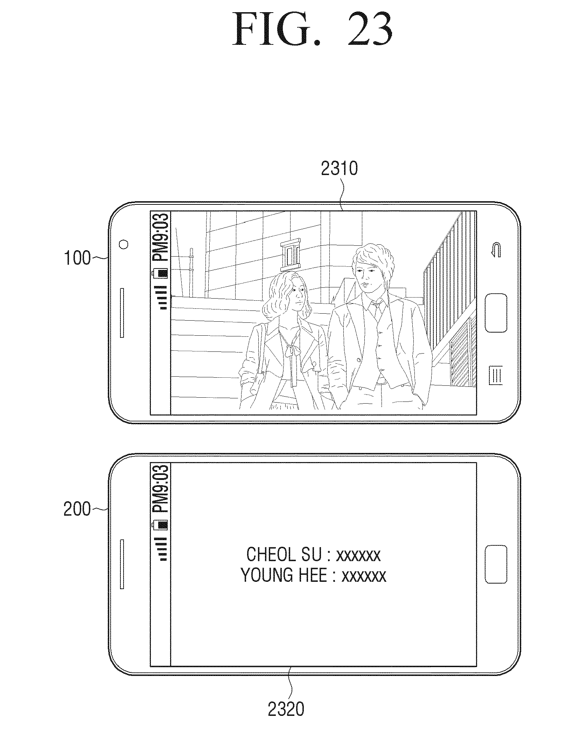

According to an exemplary embodiment, in the case of executing an application of taking a photograph in the user terminal apparatus 100, it is possible to record surrounding sound together and have a text screen be displayed on the display apparatus 200 in a real time Sound-to-Text (STT) format. Referring to FIG. 23, on the user terminal apparatus 100, a screen 2310 to be shown through the camera 160 is displayed for photographing. A screen 2320 showing a text of conversations made between two people during photographing is displayed on the display apparatus 200 using a user differentiation technology and STT technology according to the voice of the user. Furthermore, by storing the text displayed on the display apparatus 200 and providing it later, it is possible for the user to use the stored text for identifying the atmosphere during photographing. In the case where the display type of the display apparatus 200 is a type that has a slow renewal speed such as E-paper, it may be impossible to reflect a text in real time. Therefore, in the case where the display apparatus 200 is E-paper type, by updating only a part renewed in a real time conversation, it may be possible to remove the problems that may occur when updating the entire screen all at once.

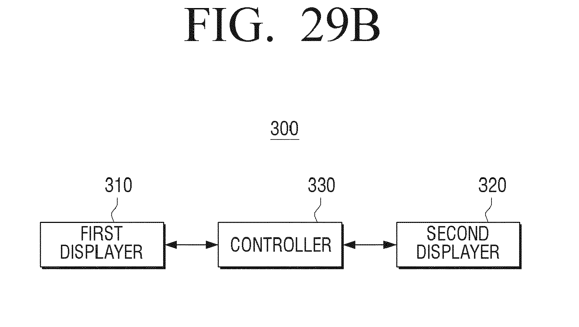

According to another exemplary embodiment, in the case where available battery power of the user terminal apparatus 100 goes below a certain level, it is possible to make a conversion such that the screen that used to be displayed on the user terminal apparatus 100 is automatically displayed on the display apparatus 200. Herein, there may be added a feature of having a screen be displayed on the user terminal apparatus 100 only when the user wants to. According to another exemplary embodiment, in the case of a user terminal apparatus 300 having two displayers 310, 320 as illustrated in FIG. 29B, it may be possible to have a first displayer 310 as the main displayer at normal times and then if available battery goes below a certain level, have a second displayer 320 that consumes less power than the first displayer 310 display the screen.

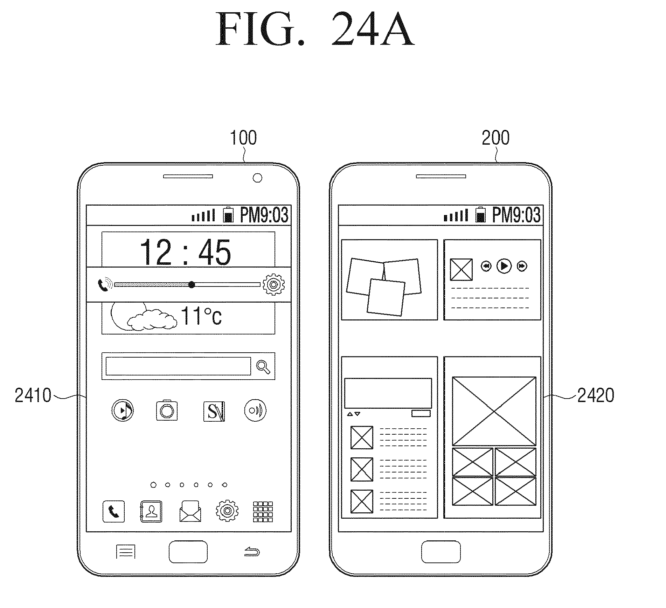

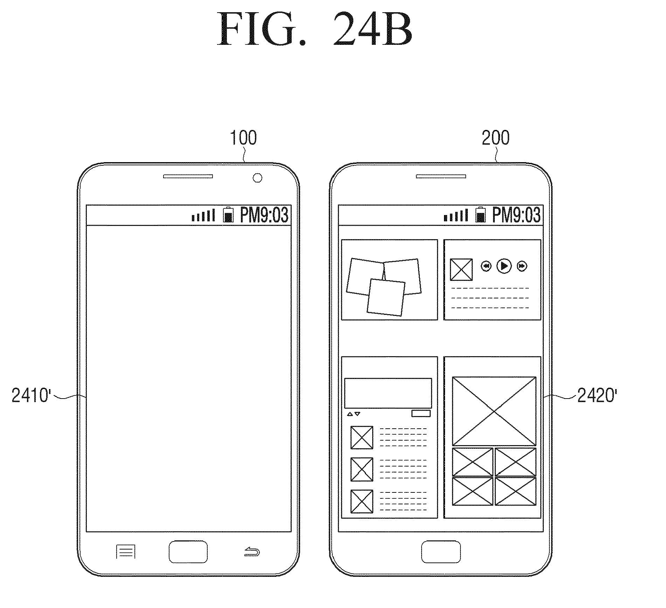

According to an exemplary embodiment, in the case of configuring a widget screen in the user terminal apparatus 100, the controller 170 may control the communicator 120 to transmit data on the configured widget screen to the display apparatus 200. Referring to FIG. 24A, the widget screen 2420 configured in the user terminal apparatus 100 is being displayed on the display apparatus 200, and a home screen 2410 is being displayed on the user terminal apparatus 100. In a user terminal apparatus 100 such as a smart phone, it is possible to scroll a home screen left and right to configure various screens, and further edit one of those screens as a widget screen. The reason why the user configures a widget screen is to make various applications into widgets according to a use format per user and use the widgets with convenience. Therefore, by having a widget screen 2420 consisting of applications that are frequently used by the user be displayed on the display apparatus 200 at all times, it is possible to consume contents quickly even when using a different home screen in the user terminal apparatus 100. Even when the user terminal apparatus 100 displays a lock screen 2410' as illustrated in FIG. 24B, the display apparatus 200 may be made to display the widget screen 2420'. Updating information of the widget screen may be made right before converting to the lock screen to include the latest information, or may be updated every time a conversion is made to the home screen. Furthermore, in the case of configuring such that conversion is made to the home screen when a case of the user terminal apparatus 100 is opened and a conversion is made to the lock screen when the user terminal apparatus 100 is closed, the opening/closing of the case may be recognized using a hall sensor or illuminance sensor, and thus it may be configured to update widget information whenever the case is opened.

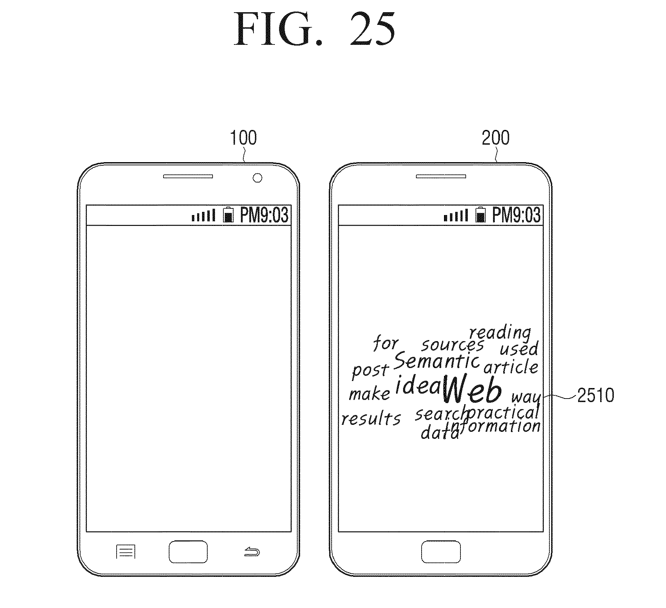

According to another exemplary embodiment, even when the screen of the user terminal apparatus 100 is turned off, a message or email application receives data. Turning on the screen of the user terminal apparatus 100 every time a message is received may require a high power consumption. Therefore, the display apparatus 200 may be configured to comprehensively display a message or email information arrived during a lock screen state in a widget format. Referring to FIG. 25, the screen of the user terminal apparatus 100 is at a lock screen state and thus displays nothing, whereas the display apparatus 200 displays a screen 2510 consisting of a widget comprehensively showing contents of a message. The widget screen 2510 shown on the display apparatus 200 is an example of applying one of various data visualization methods to display various data on one screen. There may be various visualization methods including a widget screen that is provided as a list according to time of receiving a message, but there is no limitation to the example illustrated in FIG. 25.

The aforementioned various exemplary embodiments are those that are carried out when the connection angle between displays is around 180° which is the general case. However, the exemplary embodiments may not necessarily be carried out with a connection angle of around 180°. Hereinbelow, exemplary embodiments having connection angles of displays of approximately 270° or 360° will be explained.

In the case where it is determined that the connection angle between displays is approximately 270°, the controller 170 may control such that a widget screen being displayed on the display apparatus 200 is updated. For convenience of explanation, assuming a case of a wired connection, as a method for finding out that the connection angle is 270°, it may be possible to configure a part of the connection between the user terminal apparatus 100 and display apparatus 200 to include a piezoelectric element so as to find out the angle between the two apparatuses. Otherwise, there may be a method for stationing the user terminal apparatus 100 and display apparatus 200 connected via cable on a table, and then recognizing the angle by which the user terminal apparatus 100 is placed on the table through a direction sensor of the user terminal apparatus 100. Besides the aforementioned, various methods for identifying a connection angle between the user terminal apparatus 100 and display apparatus 200 may be applied.

In the case where the connection angle between displays is 360°, it is important to differentiate a general touch input from a rear touch input. The user terminal apparatus 100 identifies the direction of the user terminal apparatus using the direction sensor of the user terminal apparatus 100, and also identifies whether or not the apparatus directed towards the user is the user terminal apparatus 100 or the display apparatus 200 in connection with the camera 160. It is determined that a touch input made when the user terminal apparatus 100 is directed towards the opposite direction of the user is a rear touch input. According to an exemplary embodiment, in the case where the user terminal apparatus 100 and display apparatus 200 are paired by a connecting angle of 360° and where the display apparatus 200 does not support a user input, when a rear touch input is made into the user terminal apparatus 100, recognizing that a copy mode has been instructed, the controller 170 may control such that the screen being displayed on the user terminal apparatus 100 is displayed on the display apparatus 200. By the aforementioned user terminal apparatus 100, various exemplary embodiments are provided where the user terminal apparatus 100 is paired with the display apparatus 200. By such a pairing, the user may obtain effects such as expansion of display screens, maximizing visibility, and efficient power consumption.

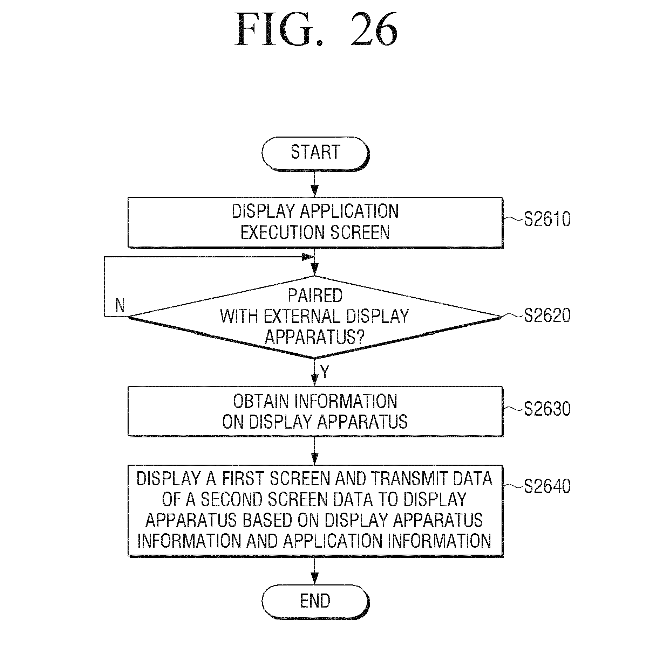

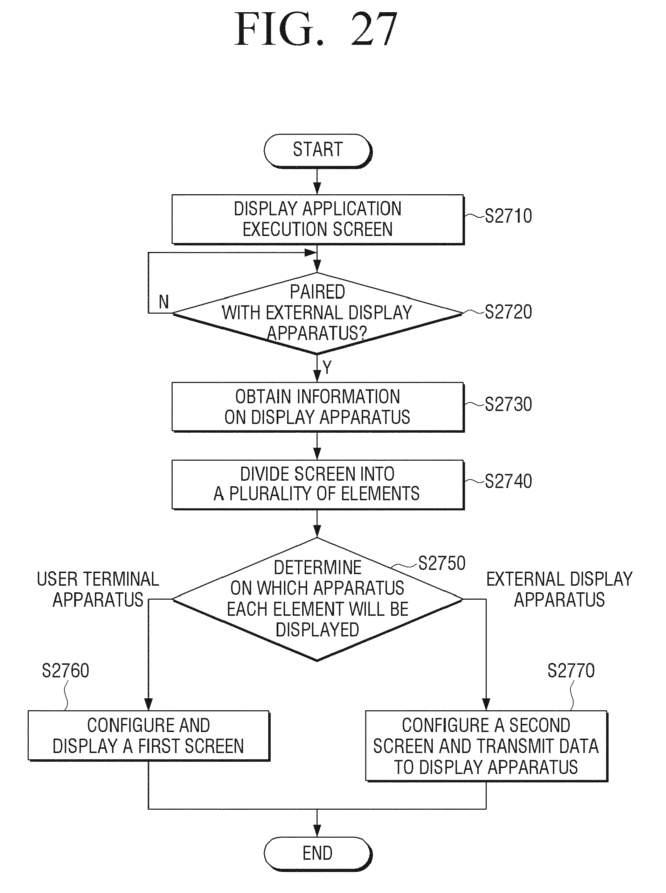

Hereinbelow, a controlling method of a user terminal apparatus will be explained with reference to FIGS. 26 and 27.

FIG. 26 is a flowchart illustrating a controlling method of a user terminal apparatus according to an exemplary embodiment. First of all, the user terminal apparatus executes an application, and an execution screen of the application is displayed on the user terminal apparatus (operation S2610). In order to reconfigure the screen being displayed on the user terminal apparatus, the user terminal apparatus needs to be paired with an external display apparatus. The user terminal apparatus determines whether or not it is paired with the external display apparatus (operation S2620). If it is determined that a pairing is not made (operation S2620-N), whether or not a pairing is made may be monitored continuously. If it is determined that a pairing is made with the external display apparatus (operation S2620-Y), the user terminal apparatus receives information on the display apparatus that is paired with the user terminal apparatus (operation S2630). Herein, information on the display apparatus may include at least one of a display type, resolution, response speed, color, tone, viewing angle, color range, connection angle, and connection state of the display apparatus. The user terminal apparatus displays a first screen regarding the application based on the obtained information of the display apparatus and information on the application being executed on the user terminal apparatus and transmits data of a second screen regarding the application to the paired display apparatus. Herein, the information on the application may include at least one of a category of the application, color properties per part, and screen renewal speed per part.

According to an exemplary embodiment, the user terminal apparatus may keep displaying the execution screen of the application that used to be executed on the user terminal apparatus as a first screen, and transmit data regarding a second screen including additional information on the execution screen of the application to the display apparatus. According to another exemplary embodiment, in the case where the execution screen of the application includes a text, data regarding a second screen including a text summarizing contents of the text included or an image may be transmitted to the display apparatus. According to another exemplary embodiment, in the case where the execution screen of the application includes video contents, data regarding a second screen including information on the video contents included or subtitles may be transmitted to the display apparatus.

According to an exemplary embodiment, in the case where there is a user input instructing a copy mode, the user terminal apparatus may not display a first screen but transmit data regarding the execution screen of the application of when there was a user input instructing a copy mode to the display apparatus. By way of another example, the user terminal apparatus may keep displaying the execution screen of the application as a first screen, and transmit data regarding the execution screen of the application of when there was a user input instructing a copy mode to the display apparatus.

According to another exemplary embodiment, in the case where a paired display apparatus does not support a user input, an operation of transmitting data corresponding to the user input to the display apparatus may be further included.

FIG. 27 is a flowchart for explaining in detail a controlling method of a user terminal apparatus according to another exemplary embodiment. The user terminal apparatus executes an application and an execution screen of the application is displayed on the user terminal apparatus (operation S2710). The user terminal apparatus is paired with an external display apparatus and becomes capable of providing various functions including dividing a screen to the user. The user terminal apparatus determines whether or not it is paired with the external display apparatus (operation S2720). If it is determined that the user terminal apparatus is not paired with the external display apparatus (operation -N), the user terminal apparatus continues monitoring whether or not a pairing is made. If it is determined the user terminal apparatus is paired with the external display apparatus (operation S2720-Y), the user terminal apparatus receives information on the display apparatus paired with the user terminal apparatus (operation

S2730). The user terminal apparatus divides the execution screen of the application being executed on the user terminal apparatus into a plurality of elements based on information on the application (operation S2740). With the received information on the display apparatus and the information on the application, the user terminal apparatus determines whether each of the divided elements should be components of the first screen or the second screen based on which apparatus the elements should be displayed to maximize the visibility and the efficiency of power consumption (operation S2750). If it is determined that each of the divided elements is an element that should be displayed on the user terminal apparatus, the element is configured in a first screen and is displayed on the user terminal apparatus (operation S2760), but if it is determined that each of the divided elements is an element that should be displayed on the display apparatus, the element is configured in a second screen and the user terminal apparatus transmits data regarding the second screen to the display apparatus (operation S2770).

According to another exemplary embodiment, when the user divides the execution screen of the application into a plurality of elements, the user may divide the execution screen of the application based on a screen renewal speed per part, and configure a first screen with the elements that include video of the plurality of divided elements and display the same on the user terminal apparatus, and configure a second screen with the remaining elements of the plurality of divided elements.

According to another exemplary embodiment, the user terminal apparatus may divide the execution screen of the application into a plurality of elements based on color properties per part. Furthermore, the user terminal apparatus may configure a first screen with elements of a first color of the plurality of divided elements, and configure a second screen with elements of a second color of the plurality of divided elements. For example, in the case where the display type of the user terminal apparatus is OLED, and the display type of the paired display apparatus is E-paper, when white color elements are displayed in an OLED, power consumption increases due to spontaneous light emitting characteristics, and thus it is advantageous in terms of efficiency of power consumption to configure a second screen with the white color elements and display the second screen on the display apparatus that is a E-paper type display.

Due to the aforementioned controlling method of a user terminal apparatus, the user may experience an expanded display environment, and may reconfigure an execution screen of an application that can be used with more convenience.

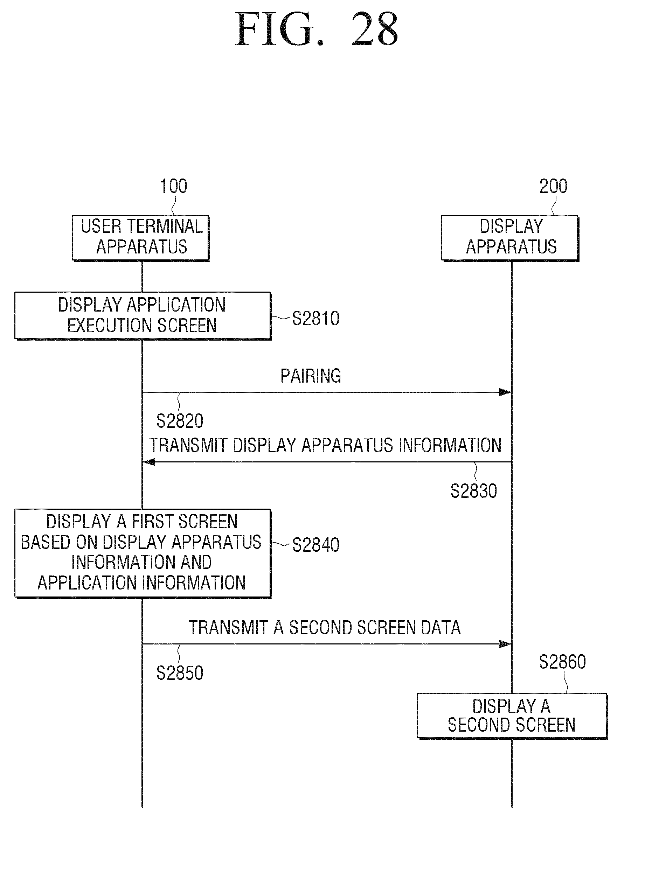

Hereinbelow, a sequence of an expanded display system will be explained with reference to FIG. 28.

Referring to FIG. 28, the expanded display system may display a first screen and a second screen in the following order. First, in the case where an execution screen of an application is being displayed on the user terminal apparatus 100 (operation S2810), the user terminal apparatus 100 is paired with the display apparatus 200 (operation S2820). When paired with the user terminal apparatus 100, the display apparatus 200 transmits display apparatus information to the user terminal apparatus 100 (operation S2830). The user terminal apparatus 100 displays a first screen regarding the application based on the display apparatus information transmitted from the display apparatus and information on the application being executed (operation S2840).

Furthermore, the user terminal apparatus 100 transmits a second screen regarding the application to the display apparatus 200. Furthermore, the display apparatus 200 displays a second screen using data on the second screen received.

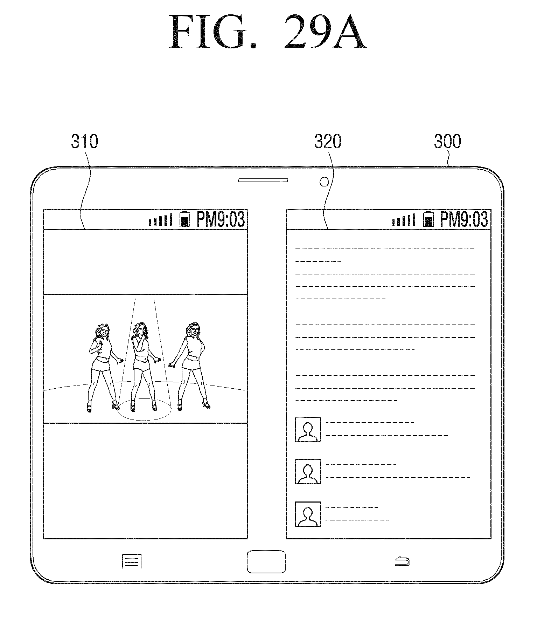

Hereinabove, only cases where a user terminal apparatus and display apparatus each has only one displayer was explained, but the aforementioned exemplary embodiments are not limited to the two apparatuses explained above. For example, the aforementioned exemplary embodiments may be applied to a user terminal apparatus having a plurality of displayers, or to cases where one user terminal apparatus is paired with a plurality of display apparatuses. FIG. 29A is a view illustrating a user terminal apparatus 300 having a plurality of displayers 310, 320, and FIG. 29B is a block diagram for explaining such a user terminal apparatus 300. In the user terminal apparatus 300 having a plurality of displayers, a first displayer 310 and a second displayer 320 may be configured to have different display characteristics and be applied to the aforementioned exemplary embodiments.

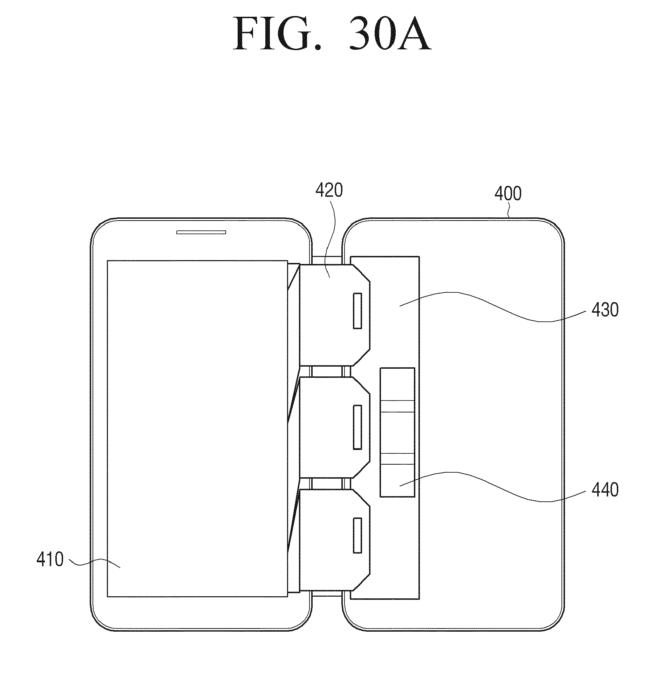

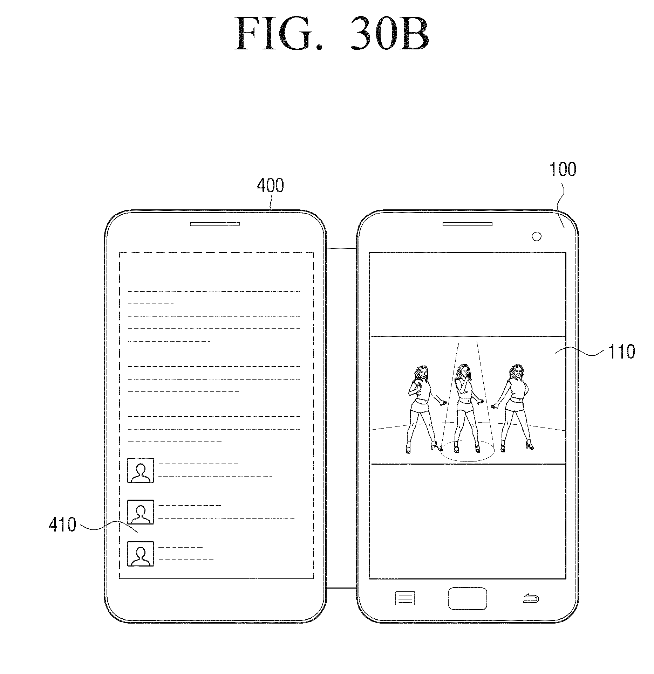

According to another exemplary embodiment, a display apparatus such as E-paper may be attached to one side of a user terminal apparatus case. FIG. 30A is a view illustrating a user terminal apparatus case 400 where E-paper is included. The user terminal apparatus case 400 may include a displayer 410, connector 420, circuit board 430, and controller 440. The displayer 410 may consist of various types of display apparatuses. Herein-below, for convenience of explanation, a case where a display apparatus is configured as E-paper will be explained. In the user terminal apparatus case 400, the connector 420 performs a function of connecting a part to which the user terminal apparatus 100 will be mounted and a part that will close the user terminal apparatus 100. The connector 420 may be configured as a Flexible Printed Circuits Board (FPCB) and enable the displayer 410 and user terminal apparatus 100 to be connected via cable to each other and operate. Furthermore, a bent degree of the connector 420 may be measured using a piezoelectric element and so forth, the user terminal apparatus 100 may determine the connecting angle between itself and the displayer 410. In the position where the user terminal apparatus 100 will be mounted, the circuit board 430 may be placed, and the controller 440 may be included in the circuit board 430. FIG. 30B is a view illustrating the user terminal apparatus 100 mounted onto the user terminal apparatus case 400. As illustrated in FIG. 30B, when using the displayer 110 of the user terminal apparatus 100 and the displayer 410 of the user terminal apparatus case 400, the aforementioned various exemplary embodiments could be applied. When using the user terminal apparatus case 400, user convenience may be improved in terms of portability.

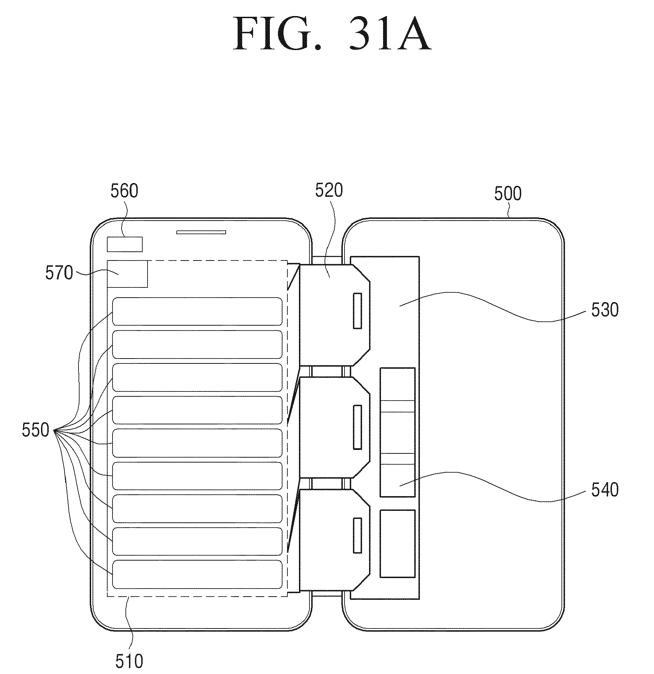

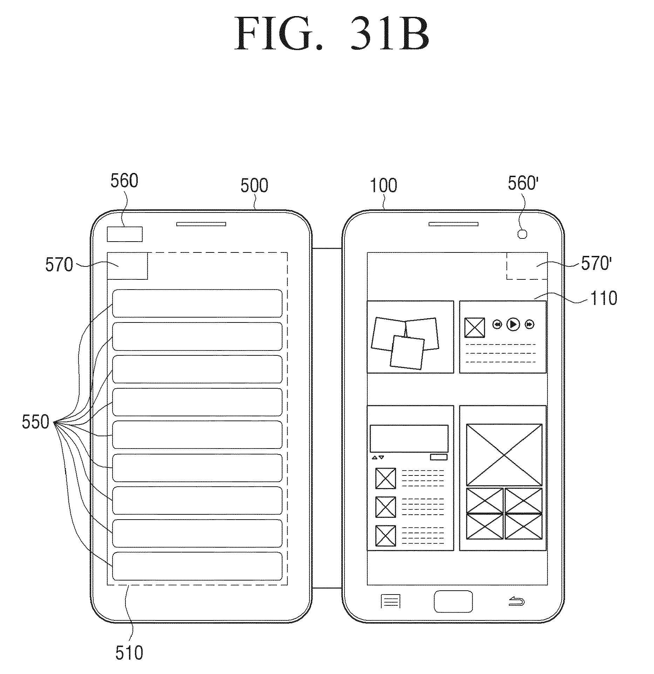

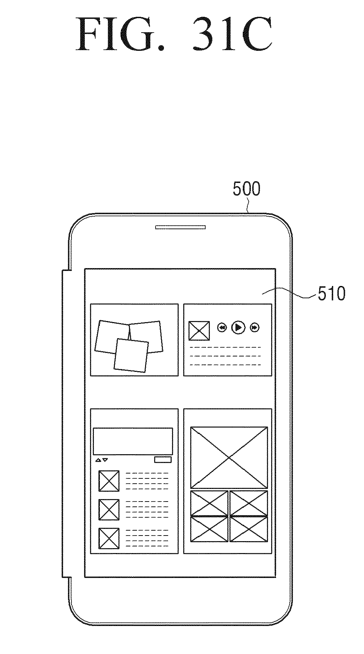

FIG. 31A is a view illustrating a different kind of user terminal apparatus case 500. The difference of this user terminal apparatus case from the user terminal apparatus case 400 illustrated in FIG. 30B is that a displayer 510 is attached at its rear side, and that power supply apparatus 550 is included. Furthermore, the user terminal apparatus case 500 may include a light emitter 560 and light receiver 570. FIG. 31B is a view illustrating the user terminal apparatus 100 attached to the user terminal apparatus case 500. As illustrated in Fig. 31B, when the user terminal apparatus case 500 is open, the screen that can be viewed by the user is only the displayer 110 of the user terminal apparatus 100. Therefore, when the user terminal apparatus case 500 is open, the screen that the user may see is the displayer 110 of the user terminal apparatus 100 only. Therefore, when the user terminal apparatus case 500 is open, the displayer 510 does not display a screen, but a power supply apparatus 550 that may consist of a solar cell etc. may charge the power to be used in the displayer 510. When the user terminal apparatus case 500 is closed, the light emitter 560 contacts the camera of the user terminal apparatus 100 and the part 560' where a camera or optical sensor is mounted. Furthermore, the light receiver 570 is configured to correspond to the light emitting element 570; of the user terminal apparatus. Therefore, in the case where the user terminal apparatus case 500 is closed and covers the user terminal apparatus 100, the user terminal apparatus case 500 may use the light emitter 560 and light receiver 570 to transmit/receive data to/from the user terminal apparatus 100, and identify the connecting angle using illuminance etc. FIG. 31C is a view illustrating in the case where the user terminal apparatus case is closed 500. Even when the user terminal apparatus case 500 is closed, the user may use the displayer 510 attached outside the case to check the widget screen of the user terminal apparatus 100. Data on the screen to be displayed on the displayer 510 may be received in a wireless communication method using the light receiver 570 and a NFC tag (not illustrated), or in a wired communication method through the connector 520. Through the user terminal apparatus case 500, various exemplary embodiments may be performed. Specifically, exemplary embodiments of cases where the connecting angle is o° may be applied.

Furthermore, a program code for performing the aforementioned controlling method according to various exemplary embodiments may be stored in various types of recording media. More specifically, a program code may be stored in various types of computer readable record medium such as a RAM, flash memory, ROM, Erasable Programmable ROM (EPROM), Electronically Erasable and Programmable ROM (EEPROM), register, hard disk, removable disk, memory card, USB memory and CD-ROM.

Although a few exemplary embodiments have been shown and described, it would be appreciated by those skilled in the art that changes may be made in the exemplary embodiments without departing from the principles of the invention, the scope of which is defined in the claims.

## Claims

1. A user terminal apparatus comprising:
a displayer, configured to display an execution screen of an application;
a communicator, configured to perform communication with a display apparatus;
and
a controller, configured to, in response to the user terminal apparatus being paired with the display apparatus through the communicator while the displayer displays the execution screen of the application, obtain information regarding the display apparatus, control the displayer to display a first screen of the application based on at least one piece of information of the application and the obtained information on the display apparatus, and control the communicator to transmit data of a second screen of the application to the display apparatus.

2. The user terminal apparatus according to claim 1,
wherein the information on the display apparatus includes at least one of a display type, a resolution, a response time, a color, a tone, a viewing angle, a color range, a connection angle, and a connection state of the display apparatus, and
the information regarding the application includes at least one of a category, a color properties per part, and a screen renewal speed per part of the application.

3. The user terminal apparatus according to claim 1 or claim 2,
wherein the controller divides the execution screen of the application being displayed on the displayer into a plurality of elements based on the information regarding the application, configures the first screen with a first set of the plurality of divided elements, and configures the second screen with a second set of the plurality of divided elements.

4. The user terminal apparatus according to any one of claims 1 to 3,
wherein the controller divides the execution screen of the application being displayed on the displayer into a plurality of elements based on a screen renewal speed per part, configures the first screen with elements that include video of the plurality of divided elements, and configures the second screen with elements other than the elements that include video.

5. The user terminal apparatus according to any one of claims 1 to 3,
wherein the controller divides the execution screen of the application being displayed on the displayer into a plurality of elements based on color properties per part, configures the first screen with elements of a first color of the plurality of divided elements, and configures the second screen with elements of a second color of the plurality of divided elements.

6. The user terminal apparatus according to claim 1 or claim 2,
wherein the controller controls the displayer to continue displaying the execution screen of the application as the first screen, and controls the communicator to transmit data regarding the second screen to the display apparatus,
wherein the data regarding the second screen includes additional information on the execution screen of the application.

7. The user terminal apparatus according to any one of claims 1, 2, and 6,
wherein the controller, when the execution screen of the application comprises a text, controls the communicator to transmit data regarding the second screen, that comprises at least one of the text or an image summarizing contents of the text to the display apparatus.

8. The user terminal apparatus according to any one of claims 1, 2, and 6,
wherein the controller, when the execution screen of the application comprises video contents, controls the communicator to transmit data regarding the second screen that comprises at least one of information regarding the video contents and subtitle regarding the video contents to the display apparatus.

9. The user terminal apparatus according to claim 1 or claim 2,
wherein the controller, when a user input instructing a copy mode is input, controls the displayer so that the first screen is not displayed, and controls the communicator to transmit data on the execution screen of the application to the display apparatus.

10. The user terminal apparatus according to claim 1 or claim 2,
wherein the controller, when the display apparatus does not support a user input, controls the communicator to transmit data corresponding to the user input to the display apparatus.

11. A method for controlling a user terminal apparatus, the method comprising:
obtaining information on an external display apparatus when the user terminal apparatus is paired with the external display apparatus while an execution screen of an application is displayed on the user terminal; and
displaying a first screen of the application based on at least one piece of information on the application that the user terminal apparatus is executing, and the obtained information on the external display apparatus, and
transmitting data of a second screen of the application to the external display apparatus.

12. The method according to claim 11, further comprising:
dividing the execution screen of the application being displayed into a plurality of elements based on the information on the application; and
configuring a first screen with a first set of the plurality of divided elements, and configuring a second screen with a second set of the plurality of divided elements.

13. The method according to claim 11 or claim 12,
wherein the dividing divides the execution screen of the application being displayed into a plurality of elements based on a screen renewal speed per part, and
the configuring configures the first screen with elements comprising video contents of the plurality of divided elements, and configures the second screen with divided elements other than the video contents.

14. The method according to claim 11,
wherein the transmitting continues displaying the execution screen of the application as the first screen, and transmits data regarding the second screen to the external display apparatus, wherein the data regarding the second screen comprises additional information on the execution screen of the application.

15. The method according to claim 11,
wherein the transmitting, when a user input is made instructing a copy mode, does not display the first screen, but transmits to the external display apparatus data on the execution screen of the application.
